# EUROPEAN PATENT APPLICATION

(11) **EP 4 851 747 A1**
(43) Date of publication of application: **09.12.2026**
(21) Application number: 26707081.1
(22) Date of filing: 24.02.2026
(51) Int. Cl.: G06F 1/16, G09F 9/30, H04M 1/02

(54) **FLEXIBLE DISPLAY INCLUDING SUPPORT PLATE AND FOLDABLE ELECTRONIC DEVICE INCLUDING SAME**

(30) Priority: 28.03.2025 KR 20250040272; 01.04.2025 KR 20250042352; 24.04.2025 KR 20250054159; 17.06.2025 KR 20250079899; 05.12.2025 KR 20250191676
(71) Applicant: SAMSUNG ELECTRONICS CO., LTD., Yeongtong-gu Suwon-si, Gyeonggi-do 16677 (KR)
(72) Inventor: LEE, Dohyeon, Suwon-si, Gyeonggi-do 16677 (KR); PARK, Sangil, Suwon-si, Gyeonggi-do 16677 (KR); KANG, Hyunggwang, Suwon-si, Gyeonggi-do 16677 (KR); JUNG, Hojin, Suwon-si, Gyeonggi-do 16677 (KR); LEE, Wonho, Suwon-si, Gyeonggi-do 16677 (KR); YEO, Moonki, Suwon-si, Gyeonggi-do 16677 (KR); KIM, Yongho, Suwon-si, Gyeonggi-do 16677 (KR); CHO, Hyeon, Suwon-si, Gyeonggi-do 16677 (KR); HONG, Hyunju, Suwon-si, Gyeonggi-do 16677 (KR); AHN, Joseph, Suwon-si, Gyeonggi-do 16677 (KR)
(74) Representative: Gulde & Partner
(86) International application number: PCT/KR2026/003049
(87) International publication number: WO 2026/205790

(57) **Abstract**

A foldable electronic device includes a foldable housing including a first housing part and a second housing part rotatably connected to the first housing part, and a flexible display. The flexible display includes a display panel, and a support plate, supporting the display panel, formed from a carbon fiber reinforced plastic (CFRP). The support plate of the flexible display includes a first layer including a first CFRP, a second layer, stacked under the first layer, at least including a second CFRP, a third layer, stacked under the second layer, including a third CFRP. Tensile modulus of the second CFRP is higher than tensile modulus of the first CFRP and tensile modulus of the third CFRP.

## Description

### [Technical Field]

The present disclosure relates to a flexible display including a support plate and a foldable electronic device including the same.

### [Background Art]

A foldable electronic device may include housing parts that are rotatably connected. The foldable electronic device may include a flexible display that is bent according to rotation of housing parts. The flexible display may include a display panel configured to display visual information and a support plate supporting the display panel. Meanwhile, carbon fiber reinforced plastic (CFRP) is a material that is lightweight and provides high stiffness. The support plate may include CFRP. The stiffness of the CFRP may be based on a precursor of carbon fibers and an arrangement direction of the carbon fibers.

The above-described information may be provided as a related art for the purpose of helping understanding of the present disclosure. No argument or decision is made as to whether any of the above description may be applied as a prior art related to the present disclosure.

### [Disclosure]

### [Technical Solution]

A foldable electronic device is disclosed. The foldable electronic device may comprise a foldable housing including a first housing part and a second housing part rotatably connected to the first housing part. The foldable electronic device may comprise a flexible display. The flexible display may include a display panel, and a support plate supporting the display panel and formed from carbon fiber reinforced plastic (CFRP). While carbon fiber reinforced plastic (CFRP) is a preferred material for the support plate, the support plate may more generally be formed from any fiber-reinforced polymer (FRP) or composite material comprising high-strength fibers embedded in a resin matrix, such as glass fiber reinforced plastic (GFRP) or aramid fiber reinforced plastic. The support plate may include a plurality of rigid regions and at least one flexible region. Each of the plurality of rigid regions of the support plate of the flexible display may include a first layer portion comprising a first CFRP, a second layer portion, stacked under the first layer portion, comprising a second CFRP, and a third layer portion, stacked under the second layer portion, comprising a third CFRP. Tensile modulus of the second CFRP may be higher than tensile modulus of the first CFRP and tensile modulus of the third CFRP.

A foldable electronic device is disclosed. The foldable electronic device may comprise a foldable housing including a first housing part and a second housing part rotatably connected to the first housing part. The foldable electronic device may comprise a flexible display. The flexible display may include a display panel, and a support plate supporting the display panel and formed from carbon fiber reinforced plastic (CFRP). The support plate of the flexible display may include a first layer comprising a first CFRP, a second layer, stacked under the first layer, at least comprising a second CFRP, and a third layer, stacked under the second layer, comprising a third CFRP. Tensile modulus of the second CFRP may be higher than tensile modulus of the first CFRP and tensile modulus of the third CFRP.

A flexible display is disclosed. The flexible display may include a display panel including a bending portion and a flat portion. The flexible display may include a support member disposed under a surface of the display panel. The support member may include a first support portion supporting the bending portion and a second support portion supporting the flat portion. The second support portion may include a first flat layer, disposed under the flat portion, having first tensile modulus, and a second flat layer, disposed between the first flat layer and the flat portion, having second tensile modulus smaller than the first tensile modulus.

An electronic device is disclosed. The electronic device may include a foldable housing including a first housing portion and a second housing portion connected to the first housing part to be foldable. The electronic device may include a hinge assembly connecting the first housing portion and the second housing portion so that the first housing portion and the second housing portion may be rotated to be folded and unfolded, respectively. The electronic device may include a flexible display accommodated in the first housing portion and the second housing portion and bendable when the first housing portion and the second housing portion are folded. The flexible display may include a display panel including a flat portion that is planar and a bending portion on the hinge assembly, and a support member disposed between the display panel and the foldable housing. The support member may include a first flat layer, disposed under the flat portion, having first tensile modulus, and a second flat layer, disposed between the first flat layer and the flat portion, having second tensile modulus smaller than the first tensile modulus.

### [Description of the Drawings]

FIG. 1 is a block diagram of an electronic device in a network environment according to various embodiments.
FIG. 2A illustrates an example of an unfolded state of an electronic device according to an embodiment.
FIG. 2B illustrates an example of a folded state of an electronic device according to an embodiment.
FIG. 2C is an exploded view of an electronic device according to an embodiment.
FIG. 3 is an exploded perspective view of a flexible display.
FIG. 4A is a perspective view of a display panel and a support plate.
FIG. 4B is a plan view of a support plate.
FIGS. 5 and 6 illustrate examples of layers of a support plate.
FIG. 7 illustrates a temperature of a foldable electronic device including the support plate illustrated in FIG. 6.
FIG. 8 illustrates a temperature of a foldable electronic device including the support plate illustrated in FIG. 5.
FIG. 9 is a plan view of the support plate illustrated in FIG. 5.
FIGS. 10A, 10B, 10C, and 10D illustrates examples of a support plate including five layers.
FIG. 11 is an exploded perspective view of a support plate including a second layer comprising different types of CFRPs.
FIG. 12 is a cross-sectional view of a support plate cut along line A-A' of FIG. 4A.
FIG. 13 illustrates a foldable housing to which a waterproof tape is attached.
FIG. 14 is a perspective view of a foldable electronic device.
FIGS. 15, 16, 17, 18, and 19 illustrate manufacturing processes of the support plate including the second layer of FIG. 11.
FIG. 20 illustrates states of a foldable electronic device according to an embodiment.
FIG. 21 is an exploded perspective view of the foldable electronic device of FIG. 20.
FIGS. 22 and 23 illustrate a support plate of a flexible display.
FIG. 24 is an exploded perspective view of a support plate including a second layer comprising different types of CFRPs.

### [Mode for Invention]

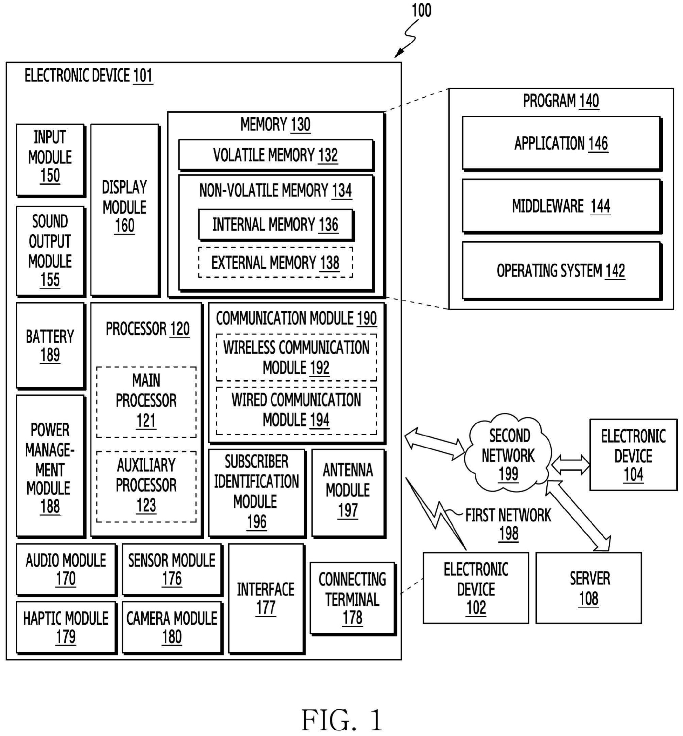

FIG. 1 is a block diagram of an electronic device in a network environment according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

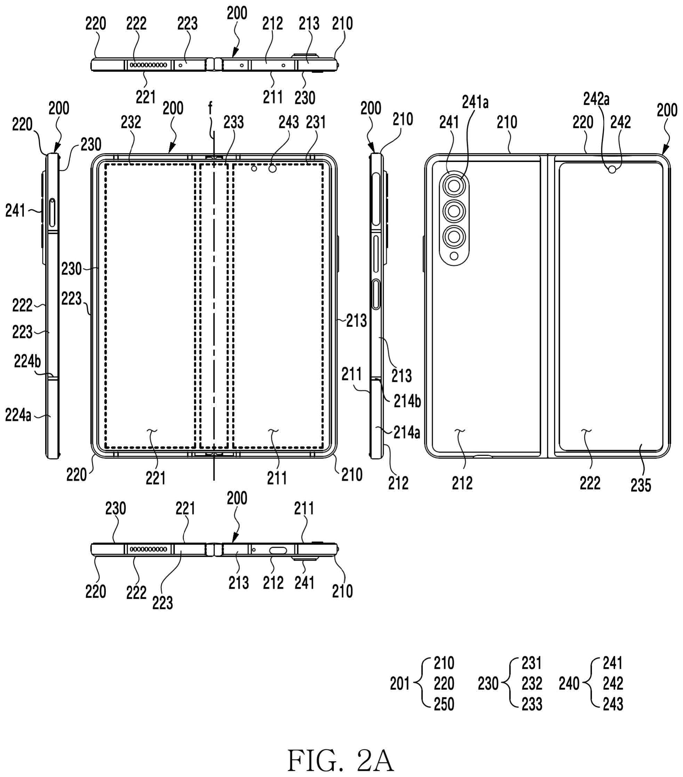

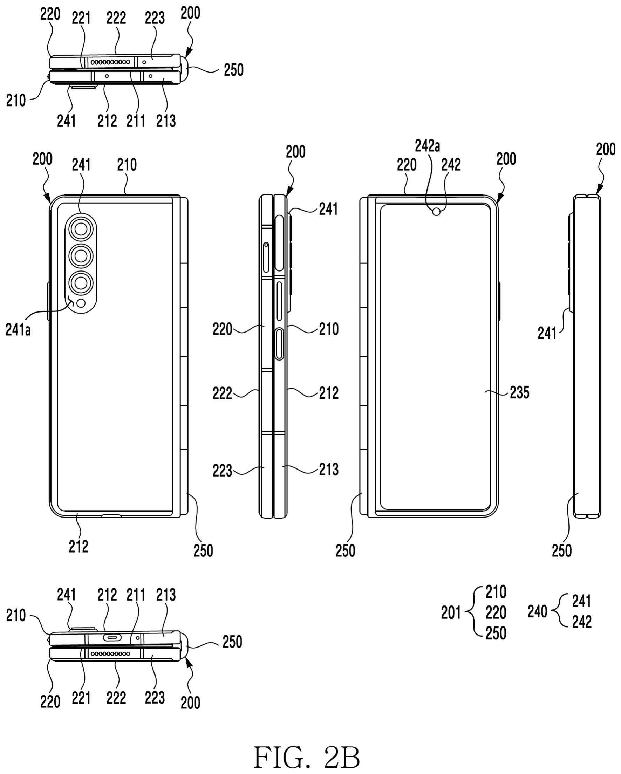

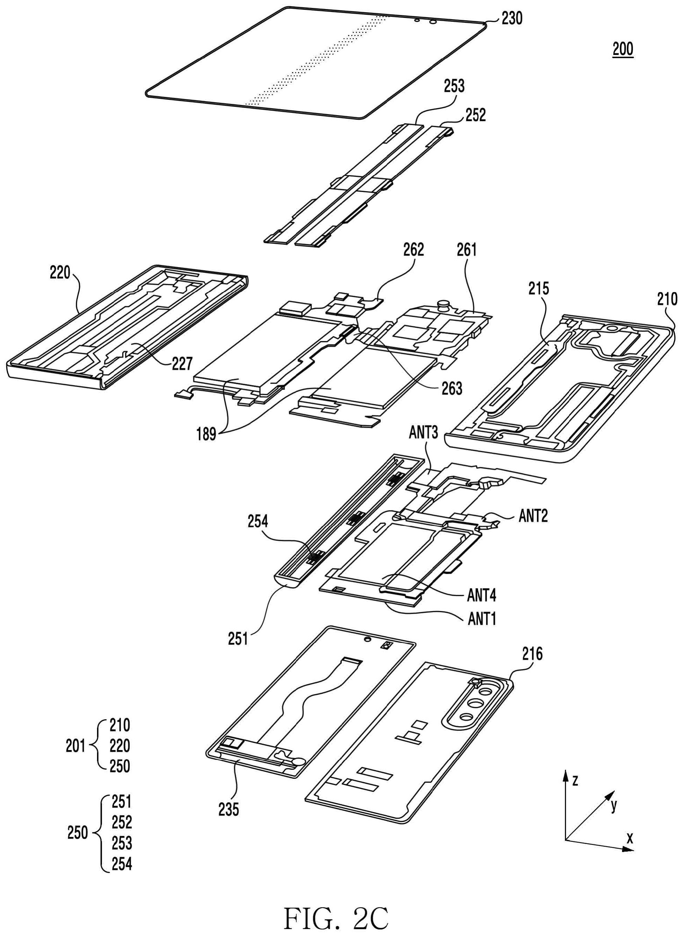

FIG. 2A illustrates an example of an unfolded state of an electronic device according to an embodiment. FIG. 2B illustrates an example of a folded state of an electronic device according to an embodiment. FIG. 2C is an exploded view of an electronic device according to an embodiment.

The electronic device 101 of FIG. 1 may include a foldable electronic device 200. Referring to FIGS. 2A and 2B, the foldable electronic device 200 according to an embodiment may include a foldable housing 201, a flexible display 230, one or more cameras 240, and a hinge assembly 250.

According to an embodiment, the foldable housing 201 may define an exterior of the foldable electronic device 200. For example, the foldable housing 201, which is a physical exterior of the foldable electronic device 200 exposed to the outside, may accommodate components disposed inside the foldable electronic device 200. At least a portion of components for implementing a function of the foldable electronic device 200 may be disposed in the foldable housing 201. According to an embodiment, the foldable housing 201 includes a first housing part 210 and a second housing part 220.

According to an embodiment, the first housing part 210 may include a first surface 211, a second surface 212 opposite to the first surface 211, and a first lateral side 213 at least partially surrounding a periphery of the first surface 211 and a periphery of the second surface 212. For example, the first surface 211 may be referred to a front surface of the first housing part 210, and the second surface 212 may be referred to a rear surface of the first housing part 210. The first lateral side 213 may be connected to the periphery of the first surface 211 and the periphery of the second surface 212. The first surface 211, the second surface 212, and the first lateral side 213 may form an internal space of the first housing part 210. For example, at least one component may be disposed in a space surrounded by the first surface 211, the second surface 212, and the first lateral side 213.

According to an embodiment, the second housing part 220 may include a third surface 221, a fourth surface 222 opposite to the third surface 221, and a second lateral side 223 at least partially surrounding a periphery of the third surface 221 and a periphery of the fourth surface 222. For example, the third surface 221 may be referred to a front surface of the second housing part 220, and the fourth surface 222 may be referred to a rear surface of the second housing part 220. The second lateral side 223 may be connected to the periphery of the third surface 221 and the periphery of the fourth surface 222. The third surface 221, the fourth surface 222, and the second lateral side 223 may form an internal space of the second housing part 220. For example, at least one component may be disposed in a space surrounded by the third surface 221, the fourth surface 222, and the second lateral side 223.

According to an embodiment, the flexible display 230 may be configured to display visual information. For example, the flexible display 230 may include a display region including a plurality of pixels. For example, an active region may be referred to as a region for displaying visual information.

According to an embodiment, the flexible display 230 may include a first portion 231, a second portion 232, and a third portion 233 disposed between the first portion 231 and the second portion 232. The foldable electronic device 200 may further include a sub-display 235 distinct from the flexible display 230. The sub-display 235 may be referred to as a cover display.

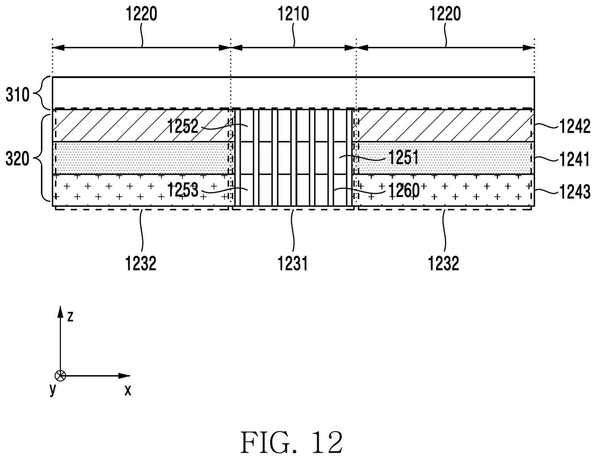

According to an embodiment, the first portion 231 may be supported by the first housing part 210. The second portion 232 may be supported by the second housing part 220. The first portion 231 and the second portion 232 may be substantially flat regardless of a state of the foldable electronic device 200. The third portion 233 may be configured to be bent based on rotation of the first housing part 210 or the second housing part 220. For example, in an unfolded state in which the first housing part 210 and the second housing part 220 are unfolded, the third portion 233 may be substantially flat. In a folded state in which the first housing part 210 and the second housing part 220 are folded, the third portion 233 may be at least partially bent. The flexible display 230 may be a flexible display including the bent third portion 233. The first portion 231 and the second portion 232 may be referred to as a flat portion (e.g., a flat portion 1220 of FIG. 12) in terms of being flat regardless of a state of the foldable electronic device 200. The third portion 233 may be referred to as a bending portion (e.g., a bending portion 1210 of FIG. 12) in terms of being bent according to a state of the foldable electronic device 200.

According to an embodiment, the one or more cameras 240 may be configured to obtain an image based on receiving light from a subject outside the foldable electronic device 200. For example, the one or more cameras 240 may include first cameras 241, a second camera 242, and/or a third camera 243. For example, the first cameras 241 may be disposed in the first housing part 210. For example, the first housing part 210 may include at least one opening 241a overlapping the first cameras 241 when the foldable electronic device 200 is viewed from above. The first cameras 241 may obtain an image based on receiving light from the outside of the foldable electronic device 200 through the at least one opening 241a.

According to an embodiment, the second camera 242 may be disposed in the second housing part 220. The second housing part 220 may include at least one opening 242a overlapping the second camera 242 when the foldable electronic device 200 is viewed from above. The second camera 242 may obtain an image based on receiving light from the outside of the foldable electronic device 200 through the at least one opening 242a.

According to an embodiment, the third camera 243 may be disposed in the first housing part 210. For example, the first portion 231 of the flexible display 230 may include at least one opening overlapping the third camera 243 when the flexible display 230 is viewed from above. The third camera 243 may obtain an image based on receiving light from the outside of the flexible display 230 through the at least one opening.

According to an embodiment, the second camera 242 and the third camera 243 may be disposed under the flexible display 230 or the sub-display 235 (e.g., in a -Z direction). For example, the second camera 242 and/or the third camera 243 may include an under-display camera (UDC) and/or a punch-hole camera.

According to an embodiment, the first housing part 210 and the second housing part 220 may be rotatably coupled. For example, the second housing part 220 may be rotatably coupled to the first housing part 210 through the hinge assembly 250.

According to an embodiment, the hinge assembly 250 may rotatably connect the first housing part 210 and the second housing part 220. The hinge assembly 250 may be disposed between the first housing part 210 and the second housing part 220 of the foldable electronic device 200 so that the foldable electronic device 200 may be folded. The hinge assembly 250 may enable the foldable electronic device 200 to be changed from the unfolded state to the folded state. The hinge assembly 250 may enable the foldable electronic device 200 to be changed from the folded state to the unfolded state. For example, the hinge assembly 250 may maintain the foldable electronic device 200 in a partially folded state or a partially unfolded state between the unfolded state and the folded state.

FIG. 2A illustrates the unfolded state of the foldable electronic device 200, and FIG. 2B illustrates the folded state of the foldable electronic device 200. According to an embodiment, the unfolded state may be referred to as a state in which a first direction in which the first portion 231 faces and a second direction in which the second portion 232 faces are substantially equal. The folded state may be referred to as a state in which the first direction is substantially opposite to the second direction. When the foldable electronic device 200 is in the folded state, the first housing part 210 and the second housing part 220 may be stacked on each other or overlapped with each other.

According to an embodiment, when the foldable electronic device 200 is in the folded state or an intermediate state, the first direction and the second direction may be different from each other. For example, when the foldable electronic device 200 is in the folded state, the first direction and the second direction may be opposite to each other. For example, when the foldable electronic device 200 is in the intermediate state, the first direction may form an angle with respect to the second direction.

For example, the foldable electronic device 200 may include at least one conductive portion 214a and/or 224a and at least one non-conductive portion 214b and/or 224b included in the first lateral side 213 and/or the second lateral side 223. For example, the at least one conductive portion 214a and/or 224a may be separated from another conductive portion in the first lateral side 213 and/or the second lateral side 223 by being in contact with the at least one non-conductive portion 214b and/or 224b. In an embodiment, the at least one conductive portion 214a and/or 224a may operate as an antenna radiator to be used for communication with an external electronic device.

Referring to FIG. 2C, the hinge assembly 250 may include a hinge cover 251, a first hinge plate 252, a second hinge plate 253, and a plurality of hinge modules 254. The hinge cover 251 may at least partially surround components of the hinge assembly 250 and form an outer surface of the hinge assembly 250. When the foldable electronic device 200 is in the folded state, the hinge cover 251 may be at least partially exposed to the outside of the foldable electronic device 200 through a space between the first housing part 210 and the second housing part 220. When the foldable electronic device 200 is in the unfolded state, the hinge cover 251 may be covered by the first housing part 210 and the second housing part 220 and may not be exposed to the outside of the foldable electronic device 200.

According to an embodiment, the first hinge plate 252 and the second hinge plate 253 may rotatably connect the first housing part 210 and the second housing part 220 by being operatively coupled to the first housing part 210 and the second housing part 220, respectively. The second housing part 220 may be rotatably connected to the first housing part 210 with respect to a folding axis f through the hinge assembly 250. For example, the first hinge plate 252 may be coupled to a first bracket 215 of the first housing part 210, and the second hinge plate 253 may be coupled to a second bracket 227 of the second housing part 220. As the first hinge plate 252 and the second hinge plate 253 are operatively coupled to the first bracket 215 and the second bracket 227, respectively, the first housing part 210 and the second housing part 220 may be rotatable according to rotation of the first hinge plate 252 and the second hinge plate 253.

According to an embodiment, the plurality of hinge modules 254 may rotate the first hinge plate 252 and the second hinge plate 253. For example, the plurality of hinge modules 254 may include gears capable of being engaged with each other and rotatable. The first hinge plate 252 and the second hinge plate 253 may be rotated based on a rotational operation of the gears of the plurality of hinge modules 254.

According to an embodiment, the first housing part 210 may include the first bracket 215 and a rear cover 216. The first bracket 215 may be disposed inside the first housing part 210 and may support at least one component disposed in the first housing part 210. The rear cover 216 may at least partially form the second surface 212 of the first housing part 210. For example, the second housing part 220 may include the second bracket 227. The second bracket 227 may be disposed inside the second housing part 220 and may support at least one component disposed in the second housing part 220. For example, the sub-display 235 may be disposed under the second bracket 227 (e.g., in the -Z direction). According to an embodiment, the flexible display (e.g., the flexible display 230 of FIG. 2A) may define a front side of the foldable electronic device 200, and the rear cover 216 opposite to the flexible display may define a rear side of the foldable electronic device 200.

The foldable electronic device 200 according to an embodiment may include a plurality of electronic components for implementing various functions in addition to the one or more cameras 240 described above. For example, the foldable electronic device 200 may include a first printed circuit board 261, a second printed circuit board 262, a flexible printed circuit board 263, and/or a battery 189. The above-described electronic components are merely exemplary and are not limited thereto.

For example, the first printed circuit board 261 and the second printed circuit board 262 may each provide an electrical connection of components in the foldable electronic device 200. For example, the first printed circuit board 261 may be disposed in the first housing part 210, and the second printed circuit board 262 may be disposed in the second housing part 220. The first printed circuit board 261 may provide an electrical connection between electronic components disposed in the first housing part 210. The second printed circuit board 262 may provide an electrical connection between electronic components disposed in the second housing part 220. The flexible printed circuit board 263 may electrically connect the first printed circuit board 261 and the second printed circuit board 262. For example, the flexible printed circuit board 263 may extend from the first printed circuit board 261, across the hinge assembly 250, to the second printed circuit board 262. For example, the flexible printed circuit board 263 may at least partially overlap the hinge assembly 250.

According to an embodiment, the battery 189 may be a device for supplying power to at least one component of the foldable electronic device 200, and may include, for example, a non-rechargeable primary battery and/or a rechargeable secondary battery.

According to an embodiment, the foldable electronic device 200 may include a plurality of antennas ANT1, ANT2, ANT3, or ANT4 to be used for communication with an external electronic device. For example, the foldable electronic device 200 may include a main antenna ANT1, a sub-antenna ANT2, an ultra-wideband (UWB) antenna ANT3, and/or an antenna for short-range wireless communication ANT4. However, it is not limited thereto. For example, the main antenna ANT1 may include one or more conductive portions that form at least a portion of the first housing part 210 or the second housing part 220. For example, the main antenna ANT1 may include a plurality of conductive portions forming a periphery portion of the first housing part 210. For example, the main antenna ANT1 may further include conductive portions forming an upper periphery or a side periphery of the first housing part 210. The main antenna ANT1 may be configured to transmit and/or receive signals of various frequency bands through each of the plurality of conductive portions or a combination of the plurality of conductive portions.

Hereinafter, one or more components to be described later with reference to the drawings may be implemented together with the components of the foldable electronic device 200 described with reference to FIGS. 2A, 2B, and 2C. The same reference numerals are assigned to the same components as the above-described components, and overlapping descriptions may be omitted. In the present disclosure, terms indicating positions such as "above" and "under" may be used to describe relative positions between components and do not define absolute positional relationships. For example, when the foldable electronic device 200 illustrated in the drawings is flipped over, "above" and "under" may be interchanged.

Hereinafter, components of the flexible display 230 will be described.

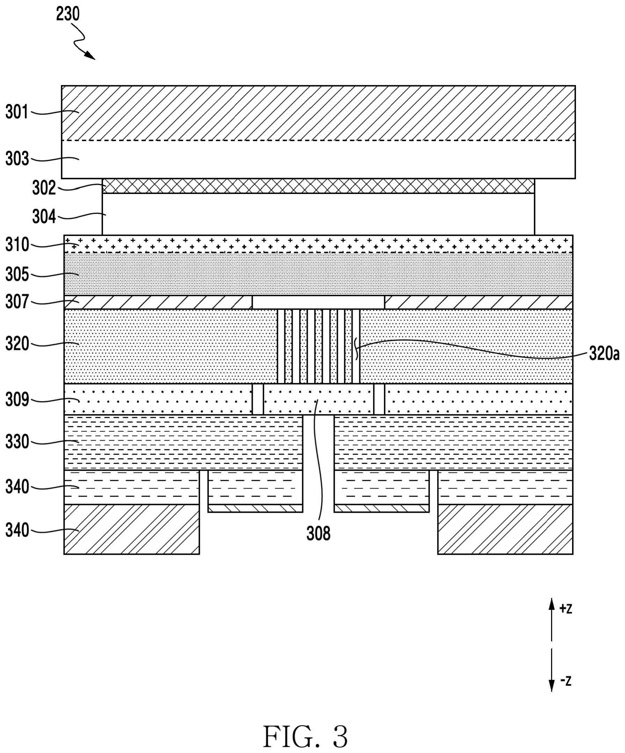

FIG. 3 is an exploded perspective view of a flexible display.

Referring to FIG. 3, a flexible display 230 may include a plurality of layers. A plurality of layers stacked on each other may form the flexible display 230. According to an embodiment, the flexible display 230 includes a display panel 310 and a support plate 320. The flexible display 230 to be described later is merely exemplary, and the flexible display 230 of the present disclosure is not limited to the flexible display 230 illustrated in FIG. 3. For example, at least one of components of the flexible display 230 to be described later may be omitted. For example, an electromagnetic induction panel 330 to be described later may be omitted.

According to an embodiment, the display panel 310 may be configured to display visual information. The display panel 310 may include pixels for displaying visual information and sub-pixels included in the pixels. The display panel 310 may be configured to output an image using the pixels and the sub-pixels. The display panel 310 may be electrically connected to display driving circuitry configured to control the flexible display 230.

The flexible display 230 may include layers for protecting the display panel 310. For example, the flexible display 230 may include a first protective layer 301 forming an outer surface of the flexible display 230 and an ultra-thin glass (UTG) 302. The first protective layer 301 and the UTG 302 may be disposed above the display panel 310 (e.g., in a +z direction) configured to display visual information. The first protective layer 301 and the UTG 302 may include a substantially transparent material so that the visual information displayed through the display panel 310 may be visible from the outside. An adhesive layer 303 may be interposed between the first protective layer 301 and the UTG 302, and an adhesive layer 304 may be interposed between the display panel 310 and the UTG 302. For example, the flexible display 230 may include a second protective layer 305 disposed under the display panel 310 (e.g., in a -z direction).

According to an embodiment, the support plate 320 may be disposed under the display panel 310 to support the display panel 310. For example, the support plate 320 may be disposed under the second protective layer 305. An adhesive layer 307 may be interposed between the second protective layer 305 and the support plate 320. The support plate 320 may be referred to as a support member in terms of supporting the display panel 310.

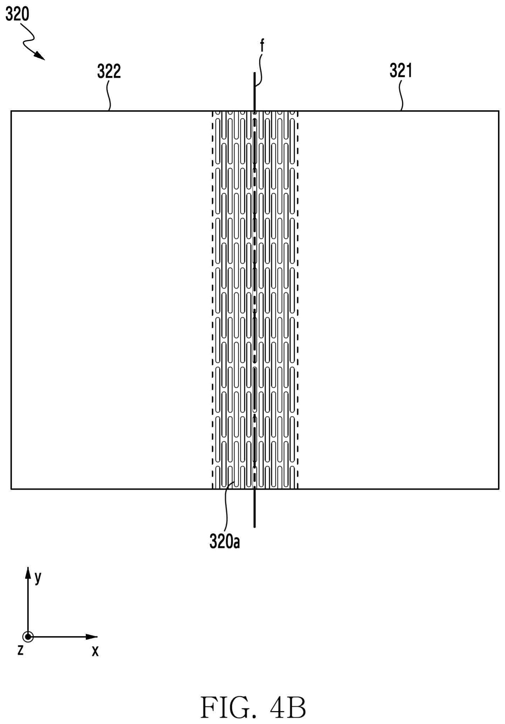

According to an embodiment, the support plate 320 may include a plurality of slits 320a. The plurality of slits 320a may provide flexibility to a portion of the support plate 320. For example, when a state of a foldable electronic device (e.g., the foldable electronic device 200 of FIG. 2A) is changed from an unfolded state to a folded state, a width of each of the plurality of slits 320a may increase by tensile force. As the width increases, a portion (e.g., a third portion 323 of FIG. 4B) of the support plate 320 including the plurality of slits 320a may be bent. The plurality of slits 320a may be referred to as a plurality of holes or lattice patterns. The plurality of slits 320a may be arranged such that the ratio of the area of the slits to the total area of the flexible region is between 20% and 50%. This range provides the necessary flexibility for folding while maintaining structural integrity to support the display panel 310. The support plate 320 may be referred to as a lattice structure or a lattice plate in terms of including the plurality of slits 320a. A protective member 308 may be disposed under a portion of the support plate 320 including the plurality of slits 320a. The protective member 308 may include thermoplastic polyurethane (TPU), but is not limited thereto. The plurality of slits 320a function to mechanically decouple the bending stiffness from the tensile strength in the flexible region. By removing material in a pattern elongated along the folding axis, the area moment of inertia is locally reduced, allowing the plate to bend with minimal reaction force, while the remaining material bridges ensure that the neutral axis remains stable, preventing the display panel from buckling into the hinge gap.

For example, the plurality of slits 320a may penetrate at least a portion of the support plate 320. For example, the plurality of slits 320a may penetrate the support plate 320 entirely, or may penetrate a portion of the support plate 320. For example, the plurality of slits 320a may extend from a front surface of the support plate 320 (e.g., a surface facing the +z direction) in contact with an adhesive layer (e.g., the adhesive layer 307 of FIG.3) to a rear surface of the support plate 320 (e.g., a surface facing the -z direction) in contact with the protective member 308. For example, the plurality of slits 320a may extend from the front surface of the support plate 320 to a position between the front surface and the rear surface of the support plate 320. For example, the plurality of slits 320a may extend from the rear surface of the support plate 320 to a position between the front surface and the rear surface of the support plate 320.

The flexible display 230 may include the electromagnetic induction panel 330 and a shielding layer 340.

For example, the electromagnetic induction panel 330 may be configured to interact with a stylus pen (or an electronic pen). The electromagnetic induction panel 330 may be referred to as a digitizer in terms of interacting with the stylus pen. For example, at least one processor (e.g., the processor 120 of FIG. 1) may be configured to obtain input information based on the interaction between the stylus pen and the electromagnetic induction panel 330. The electromagnetic induction panel 330 may be attached under the support plate 320. For example, an adhesive layer 309 may be interposed between the support plate 320 and the electromagnetic induction panel 330. The at least one processor may be configured to display information according to an operation of the stylus pen through the flexible display 230. Since the electromagnetic induction panel 330 is rigid, the electromagnetic induction panel 330 may include portions separated from each other so that the flexible display 230 may be folded.

For example, the shielding layer 340 may include magnetic metal powder (MMP). The magnetic metal powder may include iron, aluminum, nickel, and/or silicon, but is not limited thereto. The shielding layer 340 may be disposed under the electromagnetic induction panel 330. The shielding layer 340 may reduce electromagnetic waves transmitted from the inside of the foldable electronic device 200 to the electromagnetic induction panel 330, and/or electromagnetic waves transmitted from an external electronic device (e.g., the electronic pen and/or the stylus pen) to the inside of the foldable electronic device 200. The shielding layer 340 may improve electromagnetic interference (EMI). The electromagnetic induction panel 330 and the shielding layer 340 may be omitted.

Hereinafter, the display panel 310 and the support plate 320 will be described.

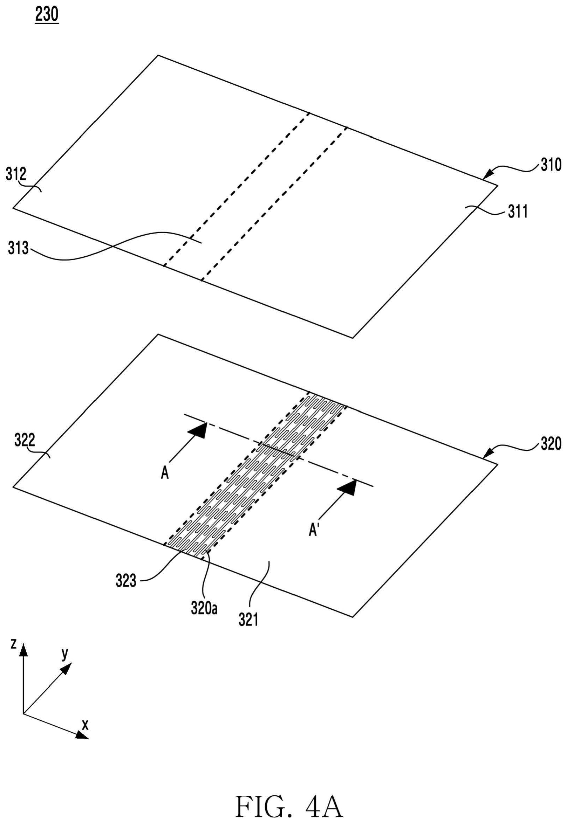

FIG. 4A is a perspective view of a display panel and a support plate. FIG. 4B is a plan view of a support plate.

Referring to FIG. 4A, a display panel 310 may include a first portion 311, a second portion 312, and a third portion 313. For example, the first portion 311 of the display panel 310 may be a portion of the display panel 310 supported by a first housing part (e.g., the first housing part 210 of FIG. 2A). For example, the second portion 312 of the display panel 310 may be a portion of the display panel 310 supported by a second housing part (e.g., the second housing part 220 of FIG. 2A). The first portion 311 and the second portion 312 may maintain a substantially flat shape independently of a state of a foldable electronic device (e.g., the foldable electronic device 200 of FIG. 2A). For example, when the foldable electronic device 200 is in a folded state, a partially folded state, or an unfolded state, the first portion 311 and the second portion 312 may not be bent and may be substantially flat.

According to an embodiment, the third portion 313 of the display panel 310 may be disposed between the first portion 311 and the second portion 312. For example, the third portion 313 may extend from the first portion 311 to the second portion 312. The third portion 313 of the display panel 310 may be substantially flat or be at least partially bent based on a state of the foldable electronic device 200.

For example, in the unfolded state of the foldable electronic device 200 illustrated in FIG. 2A, the first housing part 210 and the second housing part 220 may be disposed to form substantially the same plane. In the unfolded state of the foldable electronic device 200, the first portion 311 of the display panel 310 supported by the first housing part 210 and the second portion 312 of the display panel 310 supported by the second housing part 220 may be disposed to form substantially the same plane. The third portion 313 of the display panel 310 between the first portion 311 of the display panel 310 and the second portion 312 of the display panel 310 may be substantially flat in the unfolded state of the foldable electronic device 200.

For example, in the folded state of the foldable electronic device 200 illustrated in FIG. 2B, the first housing part 210 and the second housing part 220 may overlap each other. In the folded state of the foldable electronic device 200, the first portion 311 of the display panel 310 supported by the first housing part 210 may be disposed to face the second portion 312 of the display panel 310 supported by the second housing part 220. The third portion 313 of the display panel 310 between the first portion 311 of the display panel 310 and the second portion 312 of the display panel 310 may be bent in the folded state of the foldable electronic device 200.

According to an embodiment, a support plate 320 may be configured to support the display panel 310 under the display panel 310 (e.g., in a -z direction). The support plate 320 may have a shape corresponding to the display panel 310. Referring to FIG. 4A, the support plate 320 may include a first portion 321 corresponding to the first portion 311 of the display panel 310, a second portion 322 corresponding to the second portion 312 of the display panel 310, and a third portion 323 corresponding to the third portion 313 of the display panel 310.

For example, the first portion 321 and the second portion 322 may be relatively rigid. The first portion 321 may support the first portion 311 of the display panel 310 by being disposed under the first portion 311 of the display panel 310. The second portion 322 may support the second portion 312 of the display panel 310 by being disposed under the second portion 312 of the display panel 310. Each of the first portion 321, the second portion 322, and the third portion 323 may be referred to as a support portion. For example, the first portion 321 may be referred to as a first support portion 1231 of the support plate 320, the second portion 322 may be referred to as a second support portion 1232 of the support plate 320, and the third portion 323 may be referred to as a third support portion of the support plate 320. Rigidity of the first portion 321 and the second portion 322 may be higher than rigidity of the third portion 323. Flexibility of the first portion 321 and the second portion 322 may be lower than flexibility of the third portion 323. In terms of having relatively high rigidity, the first portion 321 and the second portion 322 may be referred to as a plurality of rigid portions or a plurality of rigid regions.

Referring to FIG. 4B, the third portion 323 of the support plate 320 may include a plurality of slits 320a. As the third portion 323 including the plurality of slits 320a corresponds to the third portion 313 of the display panel 310, the third portion 323 may be bent together with the third portion 313 of the display panel 310. As described above, the plurality of slits 320a may provide flexibility to the third portion 323 of the support plate 320. The third portion 323 including the plurality of slits 320a may overlap a folding axis f. For example, each of the plurality of slits 320a may be elongated in a direction of the folding axis f. The third portion 323 may be referred to as a flexible portion or at least one flexible region.

The support plate 320 may have high stiffness to support the display panel (e.g., the display panel 310 of FIG. 4A). For example, the support plate 320 may have high tensile modulus. Tensile modulus is an indicator indicating a ratio of strain of a material to tensile force. High tensile modulus indicates a high resistance to tensile force. Tensile modulus is a material-specific property independent of a thickness or a shape. The support plate 320 having the high tensile modulus may stably support the display panel 310 and reduce strain of the display panel 310. For example, as the strain of the display panel 310 may be reduced by the support plate 320 having the high tensile modulus, a surface quality of the flexible display 230 may be improved.

For example, in a case that a support plate includes a metal material (e.g., titanium), the support plate may have high tensile modulus. Since the metal material is relatively heavy, the support plate including the metal material may cause an increase in weight of a flexible display. Since the metal material has relatively lower thermal conductivity than a carbon fiber reinforced plastic (CFRP) to be described below, the support plate including the metal material may reduce a thermal diffusion effect through the flexible display. Since the metal material has electrical conductivity, the support plate including the metal material may electromagnetically interfere with an electromagnetic induction panel (e.g., the electromagnetic induction panel 330 of FIG. 3).

According to an embodiment, the support plate 320 is formed from the CFRP. The CFRP, which is a material including carbon fibers fixed and coupled by resin (e.g., epoxy resin), has high tensile strength, high stiffness, high thermal conductivity, low density, and high chemical resistance. The carbon fibers of the CFRP may be arranged to have directionality, and based on the directionality of the carbon fibers, a physical property of the CFRP may be determined. For example, since the CFRP is lighter than the metal material, the support plate 320 including the CFRP may be lighter than the support plate including the metal material. Since thermal conductivity of the CFRP is higher than thermal conductivity of the metal material, the support plate 320 including the CFRP may have higher thermal conductivity than the support plate including the metal material.

Since the physical property of the CFRP is based on a direction in which the carbon fibers are arranged, the support plate 320 including the CFRP may have relatively low tensile modulus with respect to a specific direction. The CFRP may be distinguished into a PAN based CFRP or a pitch based CFRP according to a precursor. A precursor of the PAN based CFRP is polyacrylonitrile (PAN), and a precursor of the pitch based CFRP is a petroleum pitch or a coal pitch. The physical property of the CFRP may be based on the precursor.

The foldable electronic device (e.g., the foldable electronic device 200 of FIG. 2A) according to an embodiment may include the support plate 320 having a structure for improving the surface quality of the flexible display 230. Hereinafter, examples of the support plate 320 including the CFRP will be described.

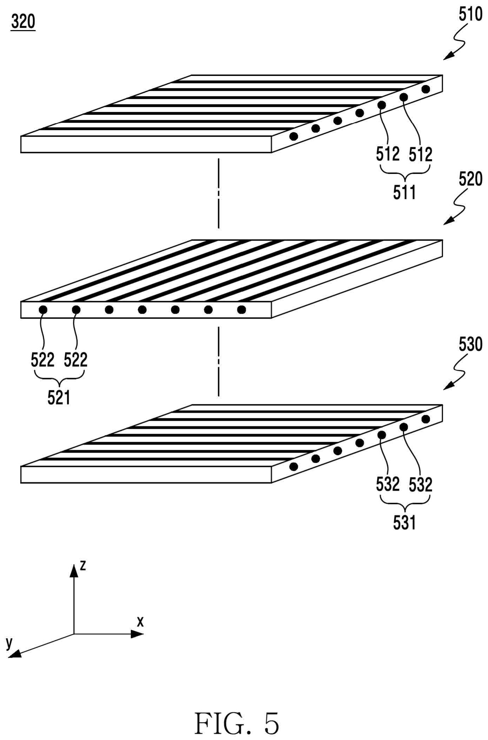

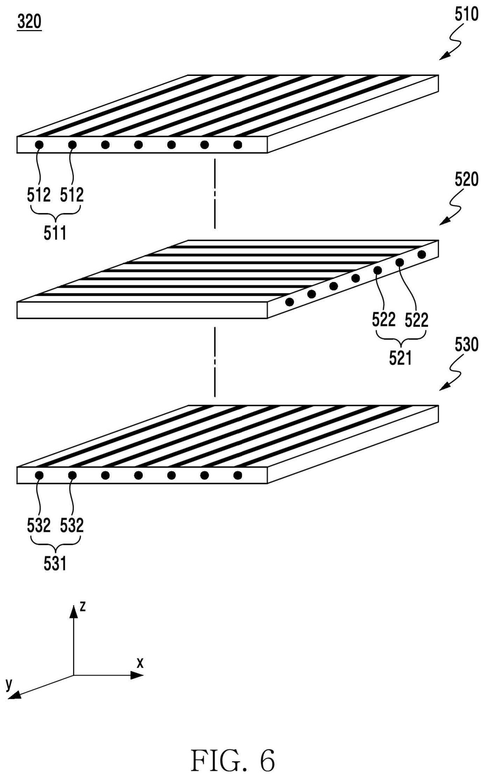

FIGS. 5 and 6 illustrate examples of layers of a support plate.

Referring to FIG. 5, a support plate 320 may include a plurality of layers. For example, the support plate 320 may be formed as the plurality of layers are stacked on each other.

According to an embodiment, the number of the plurality of layers forming the support plate 320 may be an odd number equal to or greater than 3. For example, the support plate 320 may include three layers or five layers, but the number of the plurality of layers is not limited to three or five. For example, the support plate 320 may also include the plurality of layers having the odd number equal to or greater than seven. The support plate 320 may have a structure in which the odd number of layers are sandwiched.

According to an embodiment, the plurality of layers may be distinguished, based on a middle layer, into at least one upper layer positioned above the middle layer (e.g., in a +z direction), and at least one lower layer positioned under the middle layer (e.g., in a -z direction). The middle layer, which is a layer positioned in a center among the odd number of layers, may be referred to as a central layer. While the high-stiffness material (e.g., pitch based CFRP) is described herein primarily in relation to the middle or second layer 520, it is explicitly contemplated that the high-stiffness material may be utilized in any of the first, second, or third layers, or combinations thereof, depending on the desired bending profile of the support plate 320.

For example, as illustrated in FIG. 5, in a case that the plurality of layers include three layers (e.g., a first layer 510, a second layer 520, and a third layer 530) sequentially stacked, the second layer 520 may correspond to the middle layer, the first layer 510 may correspond to the at least one upper layer, and the third layer 530 may correspond to the at least one lower layer. The second layer 520 may be positioned between the first layer 510 and the third layer 530.

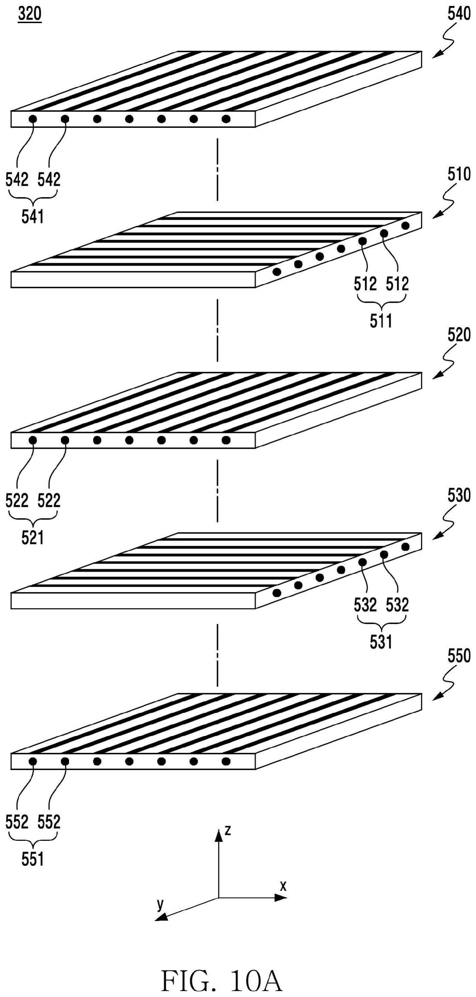

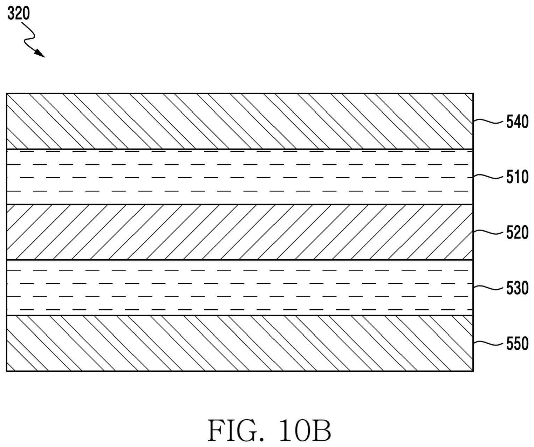

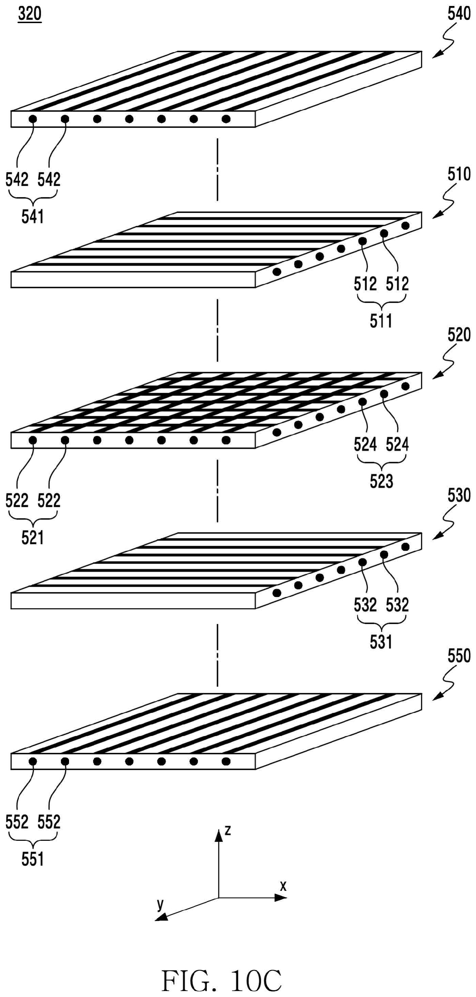

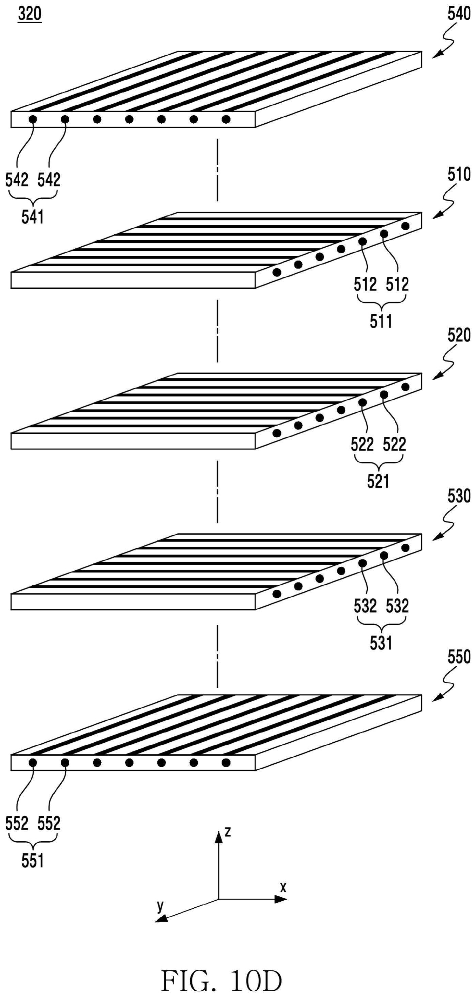

As will be described later with reference to FIGS. 10A, 10B, 10C, and 10D, in a case that the plurality of layers include five layers (e.g., the first layer 510, the second layer 520, the third layer 530, a fourth layer 540, and a fifth layer 550), the second layer 520 may correspond to the middle layer, the first layer 510 and the fourth layer 540 may correspond to the at least one upper layer, and the third layer 530 and the fifth layer 550 may correspond to the at least one lower layer.

According to an embodiment, in the plurality of layers, carbon fibers of the at least one upper layer and carbon fibers of the at least one lower layer may be symmetrical to each other based on the middle layer. Carbon fibers of the middle layer may be arranged to intersect with carbon fibers of the at least one upper layer and carbon fibers of the at least one lower layer. Since the support plate 320 includes the odd number of layers, the plurality of layers may form mutual symmetry between the at least one upper layer and the at least one lower layer. In case that the support plate 320 includes an even number of layers, bending or strain due to asymmetric thermal stress may occur. Due to the symmetrical structure, since force may be uniformly dispersed in the support plate 320, a curl generated in the support plate 320 may be reduced and the bending or the strain may be reduced. By utilizing an odd number of layers with a symmetric stacking sequence relative to the middle layer, the support plate 320 effectively balances internal residual stresses generated during the curing process of the CFRP. This specific symmetry neutralizes the bending moments that would otherwise occur due to coefficients of thermal expansion (CTE) mismatches between layers, thereby preventing the support plate from warping or curling when subjected to temperature changes during operation.

Referring to FIG. 5, the support plate 320 includes the first layer 510, the second layer 520, and the third layer 530. For example, the second layer 520 may be positioned between the first layer 510 and the third layer 530. As described above, the second layer 520 may correspond to the middle layer, and the first layer 510 may be symmetrical to the third layer 530.

According to an embodiment, the first layer 510 may comprise a first CFRP 511. The second layer 520 stacked under the first layer 510 (e.g., in the -z direction) may at least comprise a second CFRP 521. The third layer 530 stacked under the second layer 520 may comprise a third CFRP 531. For example, the first CFRP 511 may be equal to the third CFRP 531. In this case, first tensile modulus may be substantially equal to third tensile modulus.

According to an embodiment, second tensile modulus of the second CFRP 521 comprised in the second layer 520 may be higher than the first tensile modulus of the first CFRP 511 comprised in the first layer 510 and the third tensile modulus of the third CFRP 531 comprised in the third layer 530.

According to an embodiment, the first CFRP 511 comprised in the first layer 510 may comprise first carbon fibers 512 arranged in a first direction. The second CFRP 521 comprised in the second layer 520 may comprise second carbon fibers 522 arranged in a second direction perpendicular to the first direction. Since the third layer 530 is symmetrical to the first layer 510, the third CFRP 531 comprised in the third layer 530 may comprise third carbon fibers 532 arranged in the first direction.

As described above, a first housing part (e.g., the first housing part 210 of FIG. 2A) and a second housing part (e.g., the second housing part 220 of FIG. 2A) may be rotatably connected to each other with respect to a folding axis (e.g., the folding axis f of FIG. 2A). According to an embodiment, the first direction may be perpendicular to a direction (e.g., a y-axis direction) of the folding axis f, and the second direction may be parallel to the direction of the folding axis. For example, the first direction may be parallel to an x-axis direction, and the second direction may be parallel to the y-axis direction. However, the first direction and the second direction are not limited thereto. For example, the first direction and the second direction may be inclined with respect to the direction of the folding axis. For example, the carbon fibers may be inclined at an angle of approximately 30 degrees to 60 degrees, and more specifically at an angle of 45 degrees, relative to the direction of the folding axis f. Such inclined arrangements may improve torsional rigidity of the foldable electronic device 200. For example, the first direction may be parallel to the direction of the folding axis, and the second direction may be perpendicular to the direction of the folding axis.

According to an embodiment, since the first carbon fibers 512 and the third carbon fibers 532 may be arranged in the first direction, and the second carbon fibers 522 may be arranged in the second direction perpendicular to the first direction, the curl, the bending, or the strain of the support plate 320 may be reduced. For example, since adjacent layers comprise carbon fibers arranged in different directions when force is applied to the support plate 320, the force may be dispersed. In case that the first carbon fibers 512 of the first layer 510 and the second carbon fibers 522 of the second layer 520 are arranged in a specific direction, the curl may be generated by force in a specific direction, or the bending or the strain due to asymmetric thermal stress may occur. Since the force and the thermal stress may be uniformly dispersed in the support plate 320 by the structure of the support plate 320 illustrated in FIG. 5, durability of the support plate 320 may be improved.

According to an embodiment, since second tensile modulus of the second layer 520 corresponding to the middle layer is higher than first tensile modulus of the first layer 510 and third tensile modulus of the third layer 530, bending stiffness in the second direction may be secured. Since the first layer 510 and the third layer 530 both comprise carbon fibers arranged in the same first direction, bending stiffness in the first direction may be secured by the two layers even with relatively low tensile modulus. According to an embodiment, since carbon fibers are arranged symmetrically with respect to the middle layer, and the middle layer comprises a CFRP having relatively high tensile modulus in order to reduce the curl, the bending, or the strain, the support plate 320 may have high durability and high bending stiffness.

According to an embodiment, the first CFRP 511 and the third CFRP 531 may include a PAN based CFRP. For example, each of the first CFRP 511 and the third CFRP 531 may correspond to the PAN based CFRP. The second CFRP 521 may include a pitch based CFRP. For example, the second CFRP 521 may correspond to the pitch based CFRP. Tensile modulus of the pitch based CFRP is higher than tensile modulus of the PAN based CFRP. For example, the tensile modulus of the pitch based CFRP may be approximately 500 GPa to approximately 900 GPa, and the tensile modulus of the PAN based CFRP may be approximately 200 GPa to approximately 400 GPa. In some embodiments, the tensile modulus of the pitch based CFRP may preferably be in a range of 600 GPa to 800 GPa, or more specifically 650 GPa to 750 GPa. Similarly, the tensile modulus of the PAN based CFRP may preferably be in a range of 250 GPa to 350 GPa. These intermediate ranges provide optimal balances between stiffness and brittleness for the support plate 320. Thermal conductivity of the pitch based CFRP is higher than thermal conductivity of the PAN based CFRP. In general, a thickness of the pitch based CFRP may be thicker than a thickness of the PAN based CFRP.

As described above, since the second tensile modulus of the second CFRP 521 is higher than the first tensile modulus of the first CFRP 511 and the third tensile modulus of the third CFRP 531, the first CFRP 511 and the third CFRP 531 may be the PAN based CFRP, and the second CFRP 521 may be the pitch based CFRP. As the pitch based CFRP comprises the second carbon fibers 522 arranged in the second direction parallel to the folding axis, tensile modulus of the support plate 320 in the second direction may be secured by the high tensile modulus of the pitch based CFRP. As the PAN based CFRP comprises the first carbon fibers 512 and the third carbon fibers 532 arranged in the first direction perpendicular to the folding axis, tensile modulus of the support plate 320 in the first direction may be secured by the two layers. Since the thickness of the PAN based CFRP is thinner than the thickness of the pitch based CFRP, a thickness of the support plate 320 by the two layers (e.g., the first layer 510 and the third layer 530) may be reduced. This configuration may create (or form) a 'sandwich' structure that optimizes the flexural rigidity-to-weight ratio. The high-modulus core (e.g., Pitch-based CFRP) functions as the primary load-bearing element to resist out-of-plane deformation, such as the pressing force from underlying waterproof tapes. Simultaneously, the lower-modulus, high-toughness outer layers (e.g., PAN-based CFRP) act as protective skins that absorb impact energy and prevent crack initiation on the surface, thereby enhancing the overall durability of the brittle core.

Since the support plate 320 according to an embodiment includes the CFRP instead of a metal material (e.g., titanium), the support plate 320 may be relatively light. Since the support plate 320 is light, weight of a flexible display (e.g., the flexible display 230 of FIG. 3) and weight of a foldable electronic device (e.g., the foldable electronic device 200 of FIG. 2A) may be reduced. As the support plate 320 may have high tensile modulus in the first direction and the second direction through carbon fibers intersecting each other, deterioration of a surface quality of the flexible display 230 caused by the strain of the support plate 320 may be reduced.

As illustrated in FIG. 5, the first carbon fibers 512 of the first CFRP 511 comprised in the first layer 510 and the third carbon fibers 532 of the third CFRP 531 comprised in the third layer 530 may be arranged in the first direction perpendicular to the folding axis, and the second carbon fibers 522 of the second CFRP 521 comprised in the second layer 520 may be arranged in the second direction parallel to the folding axis. However, the arrangement direction of the carbon fibers of the support plate 320 of the present disclosure is not limited thereto.

Referring to FIG. 6, first carbon fibers 512 of a first CFRP 511 comprised in a first layer 510 and third carbon fibers 532 of a third CFRP 531 comprised in a third layer 530 may be arranged in a second direction parallel to a direction (e.g., the y-axis direction) of a folding axis, and second carbon fibers 522 of a second CFRP 521 comprised in a second layer 520 may be arranged in a first direction (e.g., the x-axis direction) perpendicular to the direction of the folding axis. According to an embodiment, since adjacent layers comprise carbon fibers arranged in different directions, force applied to the support plate 320 may be dispersed. For example, the first CFRP 511 and the third CFRP 531 may be a PAN based CFRP, and the second CFRP 521 may be a pitch based CFRP.

According to an embodiment, second thermal conductivity of the second CFRP 521 comprised in the second layer 520 may be higher than first thermal conductivity of the first CFRP 511 comprised in the first layer 510 and third thermal conductivity of the third CFRP 531 comprised in the third layer 530. Hereinafter, a heat dissipation effect by the structure of the support plate 320 will be described.

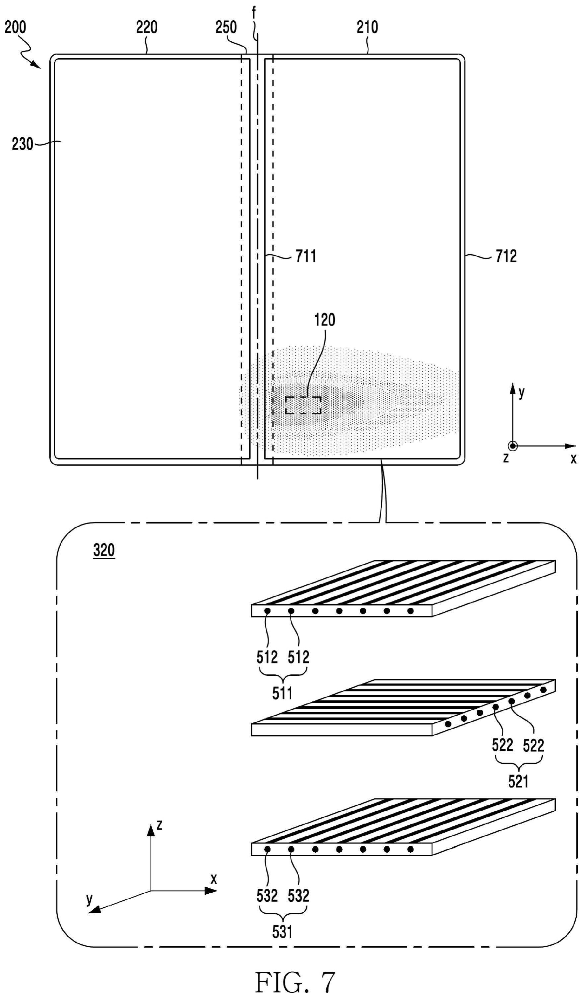

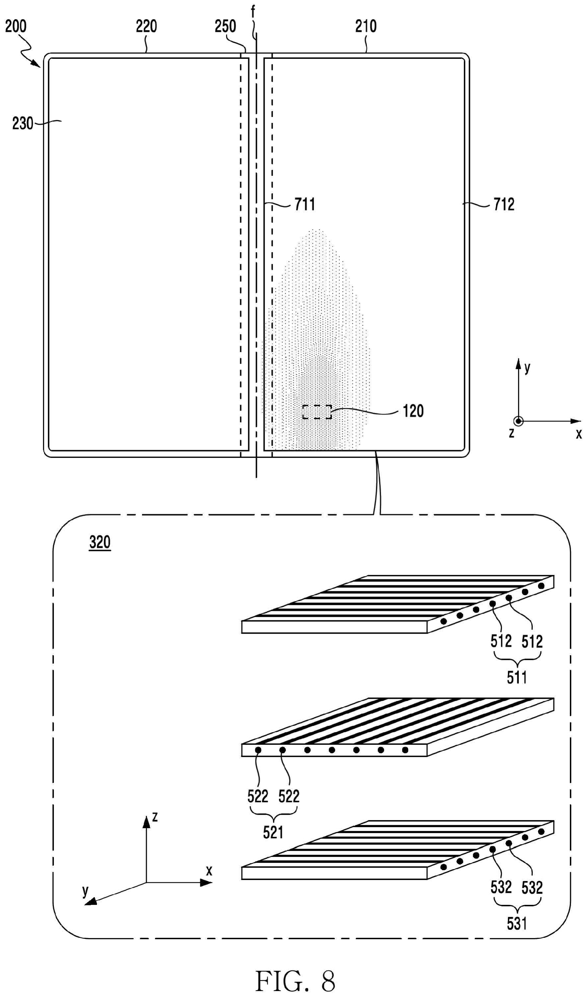

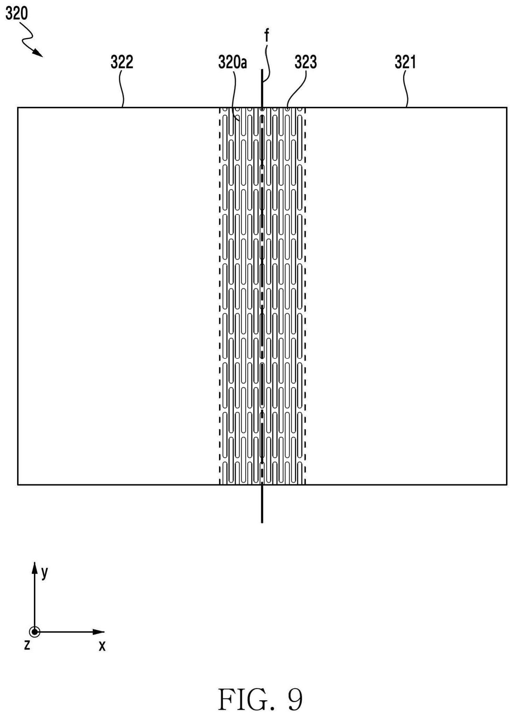

FIG. 7 illustrates a temperature of a foldable electronic device including the support plate illustrated in FIG. 6. FIG. 8 illustrates a temperature of a foldable electronic device including the support plate illustrated in FIG. 5. FIG. 9 is a plan view of the support plate illustrated in FIG. 5.

FIGS. 7 and 8 illustrate a temperature of a foldable electronic device 200 while the foldable electronic device 200 is operating. In FIGS. 7 and 8, density of hatching in a region indicates a temperature of the region. For example, a region with density of dark hatching indicates that it has a high temperature.

Referring to FIG. 7, the foldable electronic device 200 may include at least one processor (e.g., the processor 120 of FIG. 1). For example, the at least one processor may be referred to as an application processor or a main processor (e.g., the main processor 121 of FIG. 1). The at least one processor may be configured to control overall operations of the foldable electronic device 200. The application processor may include a central processing unit (CPU) and/or a graphic processing unit (GPU). Since a transistor integrated inside the CPU and/or the GPU performs various calculations, the application processor may generate a relatively large amount of heat. In a case that the heat does not diffuse and is concentrated in a specific region, the heat may cause a temperature increase in the foldable electronic device 200. By the temperature increase, malfunction of the foldable electronic device 200 may be caused, or damage to the foldable electronic device 200 may be caused. In order to reduce the malfunction or the damage, it may be necessary to diffuse the heat to a wide region.

According to an embodiment, the at least one processor may be disposed in a first housing part 210. The first housing part 210 in which the at least one processor is disposed may be referred to as a main housing part, and a second housing part 220 may be referred to as a sub-housing part. The at least one processor may be disposed adjacent to a hinge assembly 250. For example, the first housing part 210 may include a first periphery 711 and a second periphery 712 parallel to a direction (e.g., a y-axis direction) of a folding axis f. The hinge assembly 250 may be adjacent to the first periphery 711 among the first periphery 711 and the second periphery 712. The at least one processor may be closer to the first periphery 711 adjacent to the hinge assembly 250 among the first periphery 711 and the second periphery 712.

Thermal conductivity of a CFRP may be based on a precursor. Thermal conductivity of a pitch based CFRP is higher than thermal conductivity of a PAN based CFRP. The thermal conductivity of the pitch based CFRP may be approximately 100 W/mK to approximately 1,000 W/mK, and the thermal conductivity of the PAN based CFRP may be approximately 6 W/mK to 10 W/mK. Advantageously, the second CFRP 521 may have a thermal conductivity that is at least 10 times, and preferably at least 50 times, higher than the thermal conductivity of the first CFRP 511. This ratio may ensure that the middle layer acts as the primary heat diffusion path across the hinge region. The thermal conductivity of the CFRP may be based on an arrangement direction of carbon fibers. Heat diffusion in a direction in which the carbon fibers of the CFRP are arranged may be smoother than heat diffusion in a different direction from the direction.

Referring to FIG. 7, the first housing part 210 and the second housing part 220 may be rotatably connected with respect to the folding axis f. For example, the first housing part 210 may be configured to rotate in a first rotational direction (e.g., clockwise) with respect to the folding axis f, and the second housing part 220 may be configured to rotate in a second rotational direction (e.g., counterclockwise) opposite to the first rotational direction with respect to the folding axis f.

According to an embodiment, a support plate 320 may include a first layer 510, a second layer 520, and a third layer 530. First carbon fibers 512 of a first CFRP 511 comprised in the first layer 510 and third carbon fibers 532 of a third CFRP 531 comprised in the third layer 530 may be arranged in a second direction parallel to the direction (e.g., the y-axis direction) of the folding axis f, and second carbon fibers 522 of a second CFRP 521 comprised in the second layer 520 may be arranged in a first direction (e.g., an x-axis direction) perpendicular to the direction of the folding axis f.

According to an embodiment, second thermal conductivity of the second CFRP 521 may be higher than first thermal conductivity of the first CFRP 511 and third thermal conductivity of the third CFRP 531. As described above, the thermal conductivity of the pitch based CFRP is higher than the thermal conductivity of the PAN based CFRP. For example, the first CFRP 511 and the third CFRP 531 may be the PAN based CFRP, and the second CFRP 521 may be the pitch based CFRP.

According to an embodiment, since the support plate 320 includes the CFRP, heat dissipation performance of the foldable electronic device 200 may be improved. For example, since thermal conductivity of a metal material (e.g., titanium) is lower than thermal conductivity of the CFRP, heat generated from the at least one processor may be diffused through the support plate 320 including the CFRP. Although not illustrated, the foldable electronic device 200 may include a heat dissipation member for diffusing the heat. For example, the heat dissipation member may include a heat dissipation sheet, a vapor chamber, or a thermal interface material (TIM). Since heat of the foldable electronic device 200 may be diffused not only through the heat dissipation member but also through the flexible display 230 including the support plate 320 formed from the CFRP, the heat dissipation performance of the foldable electronic device 200 may be improved.

Referring to FIG. 7, a region in which the at least one processor is positioned may have a relatively higher temperature than other regions. The heat generated from the at least one processor may be diffused to the surroundings. Since the second layer 520 having relatively high thermal conductivity comprises the second carbon fibers 522 arranged in the first direction perpendicular to the direction (e.g., the y-axis direction) of the folding axis f, the heat generated from the at least one processor may be dominantly diffused in the first direction (e.g., the x-axis direction). For example, temperature of a region having the highest temperature may be approximately 49.8 °C.

Referring to FIG. 8, a support plate 320 may include a first layer 510, a second layer 520, and a third layer 530. First carbon fibers 512 of a first CFRP 511 comprised in the first layer 510 and third carbon fibers 532 of a third CFRP 531 comprised in the third layer 530 may be arranged in a first direction (e.g., an x-axis direction) perpendicular to a direction (e.g., a y-axis direction) of a folding axis f, and second carbon fibers 522 of a second CFRP 521 comprised in the second layer 520 may be arranged in a second direction parallel to the direction of the folding axis f. As described above, second thermal conductivity of the second CFRP 521 may be higher than first thermal conductivity of the first CFRP 511 and third thermal conductivity of the third CFRP 531. For example, the first CFRP 511 and the third CFRP 531 may be a PAN based CFRP, and the second CFRP 521 may be a pitch based CFRP.

Heat generated from at least one processor may be diffused to the surroundings. Since the second layer 520 having relatively high thermal conductivity comprises the second carbon fibers 522 arranged in the second direction parallel to the direction of the folding axis f, the heat generated from the at least one processor may be dominantly diffused in the second direction (e.g., the y-axis direction). For example, temperature of a region having the highest temperature may be approximately 49.0 °C.

According to an embodiment, heat dissipation performance in a case that the second carbon fibers 522 of the second CFRP 521 are arranged in the second direction parallel to the direction of the folding axis f may be higher than heat dissipation performance in a case that the second carbon fibers 522 are arranged in the first direction perpendicular to the direction of the folding axis f.

Referring to FIG. 9, a support plate 320 may include a first portion 321, a second portion 322, and a third portion 323 of the support plate 320 including a plurality of slits 320a. For example, the first portion 321 and the second portion 322 may be referred to as a plurality of rigid regions, and the third portion 323 may be referred to as at least one flexible region. Since the third portion 323 including the plurality of slits 320a is bent, the third portion 323 may at least partially overlap a hinge assembly (e.g., the hinge assembly 250 of FIG. 8). For example, at least a portion of the third portion 323 may be disposed above the hinge assembly 250 (e.g., in a +z direction). The plurality of rigid regions (321, 322) may overlap the first portion (311) and a second portion (312) of the display panel, when the flexible display is viewed from above. The at least one flexible region (323) may overlap the third portion (313) of the display panel, when the flexible display is viewed from above.

According to an embodiment, each of the plurality of slits 320a may have a length parallel to a direction (e.g., a y-axis direction) of a folding axis f. For example, each of the plurality of slits 320a may be elongated in the direction of the folding axis f. As described above, at least one processor (e.g., the at least one processor 120 of FIG. 8) may be disposed in a first housing part 210 (e.g., the first housing part 210 of FIG. 8) to be adjacent to the hinge assembly 250. Since the at least one processor is disposed in the first housing part 210 to be adjacent to the hinge assembly 250, the at least one processor may be adjacent to the third portion 323 of the support plate 320. Since each of the plurality of slits 320a included in the third portion 323 is elongated in the direction of the folding axis f, heat generated from the at least one processor may be smoothly diffused in the direction of the folding axis f.

In the support plate 320 illustrated in FIG. 7, since the second carbon fibers 522 of the second CFRP 521 having relatively high thermal conductivity are arranged in the first direction perpendicular to the direction of the folding axis f, arrangement of the second carbon fibers 522 may be perpendicular to a plurality of slits (e.g., the plurality of slits 320a of FIG. 9). In a case that the arrangement of the second carbon fibers 522 is perpendicular to the plurality of slits 320a, the heat generated from the at least one processor may not be smoothly diffused around the third portion 323 including the plurality of slits 320a, and thus the heat dissipation performance of the foldable electronic device 200 may be relatively reduced.

Meanwhile, in the support plate illustrated in FIG. 8, since the second carbon fibers 522 of the second CFRP 521 having relatively high thermal conductivity are arranged in the second direction parallel to the direction of the folding axis f, arrangement of the second carbon fibers 522 may be parallel to a plurality of slits (e.g., the plurality of slits 320a of FIG. 9).

According to an embodiment, in a case that the arrangement of the second carbon fibers 522 is parallel to the plurality of slits 320a, the heat dissipation performance of the foldable electronic device 200 may be improved, as the heat generated from the at least one processor may be smoothly diffused around the third portion 323 including the plurality of slits 320a. Since the thermal conductivity of carbon fibers is significantly higher along the fiber axis than in the transverse direction, aligning the fibers of the highly conductive second CFRP 521 parallel to the folding axis f creates a preferential thermal path. This facilitates the rapid spreading of heat generated by the processor longitudinally along the hinge area, effectively expanding the heat dissipation surface area to the entire length of the device before it saturates the display panel. According to an embodiment, the heat dissipation performance of the foldable electronic device 200 including the second carbon fibers 522 arranged in the second direction parallel to the direction of the folding axis f may be higher than the heat dissipation performance of the foldable electronic device 200 including the second carbon fibers 522 arranged in the first direction perpendicular to the direction of the folding axis f. In a case that high heat dissipation performance of the foldable electronic device 200 is required, the foldable electronic device 200 may include the support plate 320 illustrated in FIG. 5. However, the foldable electronic device 200 according to the present disclosure does not exclude the support plate 320 illustrated in FIG. 6. For example, according to a usage environment of the foldable electronic device 200 or targeted performance of the foldable electronic device 200, the foldable electronic device 200 may include the support plate 320 illustrated in FIG. 6.

FIGS. 10A, 10B, 10C, and 10D illustrates examples of a support plate including five layers.

As described above, the number of a plurality of layers of a support plate 320 may be an odd number equal to or greater than three. Although the support plate 320 including three layers has been described, the support plate 320 according to the present disclosure is not limited thereto. Referring to FIG. 10A, the support plate 320 may include five layers.

According to an embodiment, the support plate 320 may include a first layer 510, a second layer 520, a third layer 530, a fourth layer 540, and a fifth layer 550. For example, the second layer 520 may correspond to a middle layer. The first layer 510 may be stacked above the second layer 520 (e.g., in a +z direction), and the third layer 530 may be stacked under the second layer 520 (e.g., in a -z direction). The fourth layer 540 may be stacked above the first layer 510, and the fifth layer 550 may be stacked under the third layer 530. For example, the fourth layer 540, the first layer 510, the second layer 520, the third layer 530, and the fifth layer 550 may be sequentially stacked from above to under (e.g., in the -z direction).

According to an embodiment, adjacent layers may comprise carbon fibers arranged in directions intersecting each other. For example, a second CFRP 521 of the second layer 520 corresponding to the middle layer may comprise second carbon fibers 522 arranged in a second direction parallel to a direction (e.g., a y-axis direction) of a folding axis f (e.g., the folding axis f of FIG. 2A). A first CFRP 511 of the first layer 510 and a third CFRP 531 of the third layer 530 adjacent to the second layer 520 may respectively comprise first carbon fibers 512 and third carbon fibers 532 arranged in a first direction (e.g., an x-axis direction) perpendicular to the second direction. A fourth CFRP 541 of the fourth layer 540 adjacent to the first layer 510 may comprise fourth carbon fibers 542 arranged in the second direction. A fifth CFRP 551 of the fifth layer 550 adjacent to the third layer 530 may comprise fifth carbon fibers 552 arranged in the second direction. Referring to FIG. 10A, the first layer 510 and the fourth layer 540 corresponding to at least one upper layer may be symmetrical to the third layer 530 and the fifth layer 550 corresponding to at least one lower layer based on the second layer 520 corresponding to the middle layer.

According to an embodiment, second tensile modulus of the second CFRP 521 may be higher than tensile modulus of remaining CFRPs. For example, the second tensile modulus may be higher than first tensile modulus of the first CFRP 511, third tensile modulus of the third CFRP 531, fourth tensile modulus of the fourth CFRP 541, and fifth tensile modulus of the fifth CFRP 551. For example, the second CFRP 521 may include a pitch based CFRP. For example, the first CFRP 511, the third CFRP 531, the fourth CFRP 541, and the fifth CFRP 551 may include a PAN based CFRP. In a case where a thickness of the foldable electronic device 200 is thick, the support plate 320 may include five or more layers.

According to an embodiment, since a plurality of layers arranged symmetrically based on the middle layer may uniformly disperse force applied to the support plate 320, a curl generated in the support plate 320 may be reduced. Since thermal stress caused during a manufacturing process of the support plate 320 may be symmetrically distributed in the support plate 320, bending or strain of the support plate 320 may be reduced.

The structure of the support plate 320 described with reference to FIG. 10A is merely exemplary, and the present disclosure is not limited thereto.

Referring to FIG. 10B, the support plate 320 may include five layers. For example, the support plate 320 may include a first layer 510, a second layer 520, a third layer 530, a fourth layer 540, and a fifth layer 550, which are stacked with each other. As described above, the second layer 520 may correspond to a middle layer, the first layer 510 and the fifth layer 550 may correspond to at least one upper layer, and the third layer 530 and the fifth layer 550 may correspond to at least one lower layer. The fourth layer 540 and the fifth layer 550 may be referred to as outermost layers of the support plate 320. The first layer 510 and the third layer 530 may be referred to as intermediate layers. Each of the layers may include fibers.

Referring to FIG. 10C, a middle layer (e.g., the second layer 520) may include woven fabric, and at least one upper layer and at least one lower layer may include CFRP. For example, the first layer 510 may include the first CFRP 511. The third layer 530 may include the third CFRP 531. The fourth layer 540 may include the fourth CFRP 541. The fifth layer 550 may include the fifth CFRP 551.

According to an embodiment, the first CFRP 511 and the third CFRP 531 may be identical to each other, and the fourth CFRP 541 and the fifth CFRP 551 may be identical to each other. For example, the first CFRP 511 and the third CFRP 531 may correspond to a pitch based CFRP, and the fourth CFRP 541 and the fifth CFRP 551 may correspond to a PAN based CFRP.

In FIG. 10C, an arrangement of fibers included in five layers stacked with each other is illustrated. Referring to FIG. 10C, a middle layer may improve impact resistance of the support plate 320. For example, a second layer 520 corresponding to the middle layer may include woven fabric. For example, the woven fabric may enhance impact resistance of the support plate 320. The woven fabric may have a structure formed by repeatedly intersecting weft 521 and warp 523. For example, the weft 521 may include fibers 522 arranged in a second direction (e.g., the y-axis direction) parallel to a direction of a folding axis (e.g., the y-axis direction), and the warp 523 may include fibers 524 arranged in a first direction (e.g., the x-axis direction) perpendicular to the second direction. A pattern of the weft 521 and the warp 523 may be a plain weave, a twill weave, or a satin weave, but is not limited thereto.

According to an embodiment, the woven fabric formed by the weft 521 and the warp 523 may improve impact resistance of the support plate 320 by reinforcing rigidity of the support plate 320. For example, the fibers 522 and 524 may include glass fiber, carbon fiber, Kevlar, polyethylene, nylon, poly(p-phenylene benzobisoxazole) (PBO), ceramic, and/or basalt, but are not limited thereto. The fibers 522 and 524 included in the second layer 520 corresponding to the middle layer may be impregnated into prepreg in a woven form. Among layers of the support plate 320, a middle layer located at a center may have a thickness that does not cause a decrease in the flexural modulus of the support plate 320. For example, a thickness of the second layer 520 may be less than about 1/4 of an overall thickness of the support plate 320.

According to an embodiment, at least one upper layer (e.g., the first layer 510 and the fourth layer 540) may be symmetrical to at least one lower layer (e.g., the third layer 530 and the fifth layer 550), based on the second layer 520 corresponding to the middle layer.

According to an embodiment, the fourth layer 540 and the fifth layer 550 corresponding to outermost layers of the support plate 320 may improve surface quality and rigidity of the support plate 320. The fourth layer 540 may be an uppermost layer, and the fifth layer 550 may be a lowermost layer. For example, the fourth layer 540 and the fifth layer 550 may include a PAN based CFRP. For example, the fourth layer 540 may include a fourth CFRP 541 corresponding to a PAN based CFRP, and the fifth layer 550 may include a fifth CFRP 551 corresponding to a PAN based CFRP. As illustrated in FIG. 10C, the fourth layer 540 and the fifth layer 550 may correspond to each other. As a non-limiting example, the fourth CFRP 541 of the fourth layer 540 may include fourth carbon fibers 542 arranged in a second direction (e.g., the y-axis direction) parallel to a direction of a folding axis (e.g., the y-axis direction), and the fifth CFRP 551 of the fifth layer 550 may include fifth carbon fibers 552 arranged in the second direction. As a non-limiting example, the fourth carbon fibers 542 and the fifth carbon fibers 552 may include PBO, ceramic, or basalt. In order to have high flatness for improving surface quality of a flexible display (e.g., the flexible display 230 of FIG. 3), the fourth layer 540 and the fifth layer 550 may be formed to have the same thickness and may be formed with the same fiber mixing ratio. Since the fourth layer 540 and the fifth layer 550 correspond to outermost layers, anisotropy of the flexural modulus of the support plate 320 may increase when the fourth layer 540 and the fifth layer 550 are too thick. The fourth layer 540 and the fifth layer 550 may have a thickness for reducing the anisotropy of the flexural modulus of the support plate 320. For example, a sum of a thickness of the fourth layer 540 and a thickness of the fifth layer 550 may be less than about 1/2 of an overall thickness of the support plate 320.

According to an embodiment, the first layer 510 and the third layer 530 corresponding to an intermediate layer may be disposed between a middle layer and an outermost layer. For example, the first layer 510 may be disposed between the fourth layer 540 and the second layer 520, and the third layer 530 may be disposed between the second layer 520 and the fifth layer 550. The intermediate layer may improve rigidity and thermal conductivity of the support plate 320.

As a non-limiting example, the first layer 510 and the third layer 530 may include a pitch based CFRP. For example, the first layer 510 may include a first CFRP 511 corresponding to a pitch based CFRP, and the third layer 530 may include a third CFRP 531 corresponding to a pitch based CFRP. As the first layer 510 and the third layer 530 include a pitch based CFRP, a flexural modulus of the support plate 320 may be improved, and anisotropy of the flexural modulus may be reduced. As a non-limiting example, the first carbon fibers 512 and the third carbon fibers 532 may include PBO, ceramic, or basalt. Since a pitch based CFRP has a higher tensile modulus than a PAN based CFRP, a tensile modulus of the support plate 320 may be improved by the first layer 510 and the third layer 530.

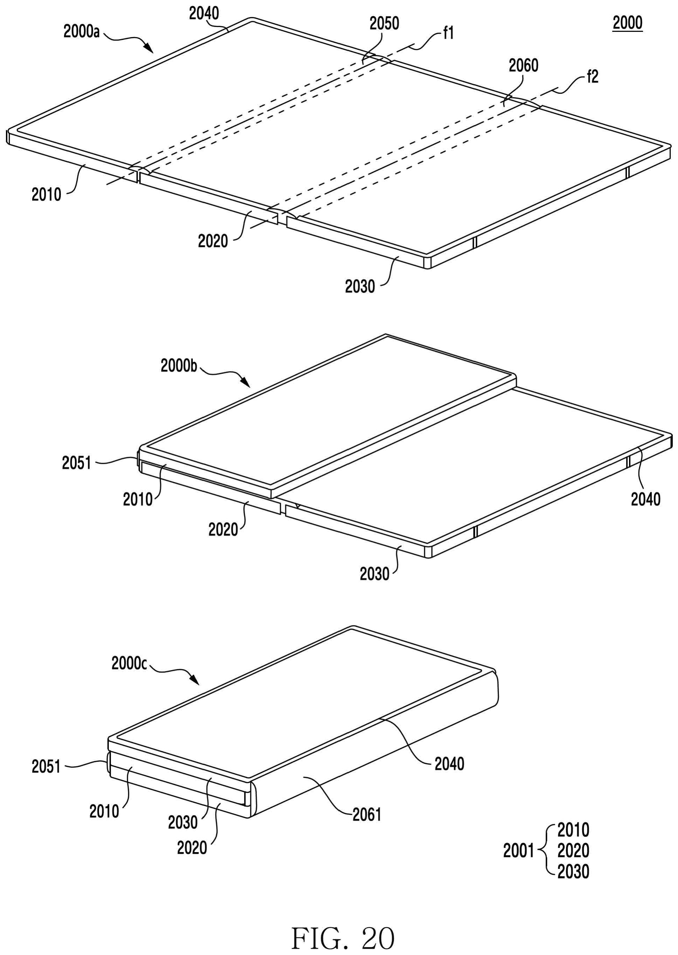

As illustrated in FIG. 10C, the first layer 510 and the third layer 530 may correspond to each other. For example, the first CFRP 511 of the first layer 510 may include the first carbon fibers 512 arranged in a first direction (e.g., the x-axis direction) perpendicular to a direction of a folding axis, and the third CFRP 531 of the third layer 530 may include the third carbon fibers 532 arranged in the first direction. The first layer 510 and the third layer 530 may have a thickness for reducing anisotropy of the flexural modulus of the support plate 320. For example, a sum of a thickness of the first layer 510 and a thickness of the third layer 530 may be less than about 1/2 of an overall thickness of the support plate 320. The support plate 320 illustrated in FIGS. 10B and 10C may have a high flexural modulus with respect to an isotropic direction by an outermost layer and an intermediate layer. For example, the flexural modulus of the support plate 320 may be about 100 GPa or more, but the present disclosure is not limited thereto. Since thermal conductivity of a pitch based CFRP is higher than thermal conductivity of a PAN based CFRP, it may have high thermal conductivity by a pitch based CFRP included in the first layer 510 and the third layer 530. For example, thermal conductivity of the support plate 320 may be about 90 W/mK, but the present disclosure is not limited thereto. Woven fabric included in a middle layer may absorb energy due to impact by suppressing growth of a crack formed by external impact and delamination between fiber and epoxy, thereby improving impact resistance of the support plate 320. According to an embodiment, a support plate 320 having a thin thickness (e.g., about 150 micrometers or less) while having high impact resistance may be provided. Descriptions regarding the support plate 320 described with reference to FIGS. 10B and 10C may be substantially identically applied to a foldable electronic device (e.g., a foldable electronic device 2000 of FIG. 20) including three housing parts.

Referring to FIG. 10D, a structure regarding an arrangement of fibers included in each of layers of the support plate 320 may be various. As illustrated in FIG. 10D, an arrangement direction of fibers included in a middle layer and an intermediate layer may be different from an arrangement direction of fibers included in an outermost layer.

According to an embodiment, a first layer 510 may be formed from a first CFRP 511 including first carbon fibers 512, a second layer 520 may be formed from a second CFRP 521 including second carbon fibers 522, and a third layer 530 may be formed from a third CFRP 531 including third carbon fibers 532. The first carbon fibers 512, the second carbon fibers 522, and the third carbon fibers 532 may be arranged in the same direction. For example, the first carbon fibers 512, the second carbon fibers 522, and the third carbon fibers 532 may be arranged in a second direction parallel to a direction of a folding axis (e.g., a direction of the folding axis f of FIG. 2A (e.g., the y-axis direction)).

According to an embodiment, the fourth layer 540 may be formed from a fourth CFRP 541 including fourth carbon fibers 542, and a fifth layer 550 may be formed from a fifth CFRP 551 including fifth carbon fibers 552. The fourth carbon fibers 542 and the fifth carbon fibers 552 may be arranged in the same direction. For example, the fourth carbon fibers 542 and the fifth carbon fibers 552 may be arranged in a first direction (e.g., the x-axis direction) perpendicular to a direction of the folding axis. The first direction in which the fourth carbon fibers 542 of the fourth CFRP 541 and the fifth carbon fibers 552 of the fifth CFRP 551 are arranged may be perpendicular to the second direction in which the first carbon fibers 512 of the first CFRP 541, the second carbon fibers 522 of the second CFRP 521, and the third carbon fibers 532 of the third CFRP 531 are arranged. In the above description, the first direction has been described as being perpendicular to a direction of the folding axis, and the second direction has been described as being parallel to a direction of the folding axis, but the present disclosure is not limited thereto. The first direction and the second direction may be inclined with respect to the folding axis, and the first direction and the second direction may be perpendicular (or intersect) to each other.

According to an embodiment, CFRP included in odd-numbered layers among five layers and CFRP included in even-numbered layers may be different types. For example, the first CFRP 541 and third CFRP 531 may correspond to a pitch based CFRP. The second CFRP 521, the fourth CFRP 541, and the fifth CFRP 551 may correspond to a PAN based CFRP. Since the second CFRP 521 of the second layer 520 corresponding to a middle layer corresponds to a PAN based CFRP, impact resistance of the support plate 320 may be improved. As a PAN based CFRP and a pitch based CFRP are alternately stacked, impact resistance of the support plate 320 may be improved. Descriptions regarding the support plate 320 described with reference to FIG. 10D may be substantially identically applied to a foldable electronic device (e.g., the foldable electronic device 2000 of FIG. 20) including three housing parts.

In the examples of the support plate 320 described above, the middle layer (e.g., the second layer 520) has been described as comprising one CFRP, but the support plate 320 of the present disclosure is not limited thereto. For example, according to regions of the second layer 520, different types of CFRPs may be comprised. Hereinafter, an example in which the second layer 520 comprises different types of CFRPs will be described.

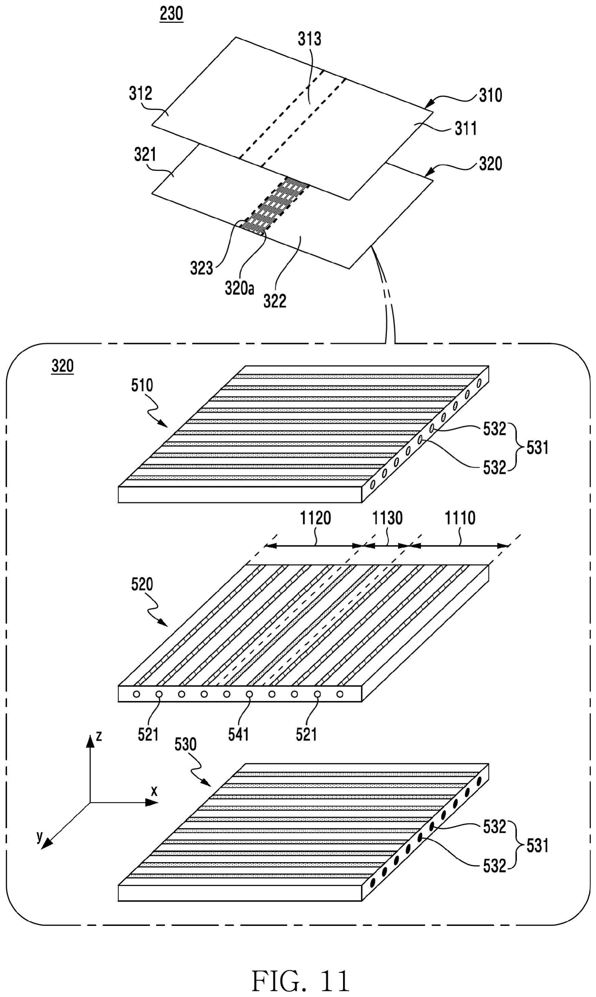

FIG. 11 is an exploded perspective view of a support plate including a second layer comprising different types of CFRPs.

Referring to FIG. 11, a support plate 320 supporting a display panel 310 may be disposed under the display panel 310 (e.g., in a -z direction). The support plate 320 may include a first layer 510, a second layer 520, and a third layer 530. A first CFRP 511 of the first layer 510 may comprise first carbon fibers 512 arranged in a first direction (e.g., an x-axis direction) perpendicular to a direction (e.g., a y-axis direction) of a folding axis (e.g., the folding axis f of FIG. 2A). A second CFRP 521 of the second layer 520 may comprise second carbon fibers 522 arranged in a second direction parallel to the direction of the folding axis.

According to an embodiment, the second layer 520 may include a first region 1110, a second region 1120, and a third region 1130. For example, the first region 1110 of the second layer 520 may correspond to a first portion 311 of the display panel 310. When a flexible display 230 is viewed from above, the first region 1110 may overlap the first portion 311. The second region 1120 of the second layer 520 may correspond to a second portion 312 of the display panel 310. When the flexible display 230 is viewed from above, the second region 1120 may overlap the second portion 312. The third region 1130 of the second layer 520 may correspond to a third portion 313 of the display panel 310. When the flexible display 230 is viewed from above, the third region 1130 may overlap the third portion 313. The third region 1130 may extend from the first region 1110 to the second region 1120. The third region 1130 may be positioned between the first region 1110 and the second region 1120. The first region 1110 and the second region 1120 are included in the plurality of rigid regions (e.g., the first portion 321 and the second portion 322 of FIG. 4), and the third region 1130 is included in the at least one flexible region (e.g., the third portion 323 of FIG 4).

For example, when a foldable electronic device (e.g., the foldable electronic device 200 of FIG. 2A) is in an unfolded state, the first region 1110 of the second layer 520 may support the first portion 311 of the display panel 310, the second region 1120 of the second layer 520 may support the second portion 312 of the display panel 310, and the third region 1130 of the second layer 520 may support the third portion 313 of the display panel 310. For example, the first region 1110 may be a portion of a first portion 321 of the support plate 320, and the second region 1120 may be a portion of a second portion 322 of the support plate 320.

According to an embodiment, the third region 1130 of the second layer 520 may be bent based on a state of the foldable electronic device 200. For example, the third region 1130 may be a portion of a third portion 323 of the support plate 320 including a plurality of slits 320a. When the state of the foldable electronic device 200 is a folded state or a partially folded state, the third region 1130 of the second layer 520 may be bent. When the foldable electronic device 200 is in the unfolded state, the third region 1130 of the second layer 520 may be substantially flat.

According to an embodiment, the first region 1110 of the second layer 520 and the second region 1120 of the second layer 520 may be substantially flat. For example, the first region 1110 and the second region 1120 may be substantially flat independently of the state of the foldable electronic device 200.

According to an embodiment, since the third region 1130 may be bent according to the state of the foldable electronic device 200 unlike the first region 1110 and the second region 1120, relatively high toughness may be required. Toughness is an ability to absorb strain energy with respect to stress, and a material having high toughness may absorb more strain energy and thus may not be easily broken. In general, the material having the high toughness may have low brittleness. Since the third region 1130 may be bent according to the state of the foldable electronic device 200, the third region 1130 should be able to absorb more strain energy than the first region 1110 and the second region 1120. For example, in a case that toughness of the third region 1130 is low, the third region 1130 may be damaged when the third region 1130 is bent. For example, when the toughness of the third region 1130 is low, the plurality of slits 320a that are thin and long may be damaged. Due to damage to the plurality of slits 320a, bending of the third portion 323 of the support plate 320 may not be smooth.

According to an embodiment, since the first region 1110 and the second region 1120 are substantially flat independently of the state of the foldable electronic device 200 unlike the third region 1130, relatively high tensile modulus may be required. Since the first region 1110 of the second layer 520 supports the first portion 311 of the display panel 310, and the second region 1120 of the second layer 520 supports the second portion 312 of the display panel 310, the display panel 310 may not be stably supported in a case that a tensile modulus of the first region 1110 and a tensile modulus of the second region 1120 are low. Deterioration of a surface quality of the flexible display 230 may be caused by low tensile modulus.

Table 1 below indicates physical properties of a PAN based CFRP and physical properties of a pitch based CFRP. In Table 1 below, T700, T800, and M40 indicate product names of Toray, and HM-90 indicates a CFRP having high modulus.

**[Table 1]**

| Type of CFRP | Classification | Tensile Modulus (GPa) | Toughness (MJ/m³) |
|---|---|---|---|
| PAN based CFRP | T700 | 230 | 51.5 |
| | T800 | 294 | 59.0 |
| | M40 | 377 | 26.4 |
| Pitch based CFRP | HM-90 | 860 | 4.5 |

Referring to Table 1, the tensile modulus of the pitch based CFRP is higher than the tensile modulus of the PAN based CFRP. The toughness of the PAN based CFRP is higher than the toughness of the pitch based CFRP.

According to an embodiment, the first region 1110 and the second region 1120 may include the second CFRP 521 having relatively high tensile modulus (e.g., second tensile modulus). As described above, the second CFRP 521 may include the pitch based CFRP. Since the first region 1110 and the second region 1120 include the second CFRP 521 having the high tensile modulus, the first region 1110 and the second region 1120 may stably support the display panel 310 and reduce deterioration of the surface quality of the flexible display 230.

According to an embodiment, the third region 1130 may include a CFRP different from the second CFRP 521. For example, the third region 1130 may include a fourth CFRP 541. Tensile modulus of the fourth CFRP 541 may be lower than tensile modulus of the second CFRP 521. Toughness of the fourth CFRP 541 may be higher than toughness of the second CFRP 521. For example, the fourth CFRP 541 may include the PAN based CFRP. Since the toughness of the PAN based CFRP is higher than the toughness of the pitch based CFRP, the third region 1130 bent according to the state of the foldable electronic device 200 may include the PAN based CFRP having high toughness. The fourth CFRP 541 of the third region 1130 may be equal to the first CFRP 511 of the first layer 510 or a third CFRP 531 of the third layer 530. As the fourth CFRP 541 forming the third region 1130 has high toughness, damage to the third region 1130 may be reduced. For example, as the third region 1130 has high toughness, damage to the plurality of slits 320a may be reduced. By substituting the high-modulus second CFRP with a high-toughness fourth CFRP (e.g., PAN-based) specifically in the third region 1130, the support plate 320 spatially tailors its mechanical response. This localization prevents brittle fracture in the high-strain hinge area during repetitive folding cycles, while maintaining the necessary high stiffness in the flat regions 1110 and 1120 to support the touch input pressure on the display panel.

FIG. 12 is a cross-sectional view of a support plate cut along line A-A' of FIG. 4A.

A support member 320 described with reference to FIG. 12 may be substantially equal to the support plate 320 described above. For example, descriptions related to FIG. 12 may be referred to as alternative descriptions for the above-described descriptions. For example, a support plate may be alternatively referred to as a support member.

A flexible display 230 according to an embodiment may include a display panel 310 and the support member 320 (e.g., support plate). For example, the display panel 310 may include a bending portion 1210 and a flat portion 1220 (or planar portion). In the disclosure, the flat portion 1220 may be referred to as a planar portion.

For example, the bending portion 1210 may be a portion of the display panel 310 included in the third portion 233 of FIG. 2A, and the flat portion 1220 may be a portion of the display panel 310 included in the first portion 231 and the second portion 232 of FIG. 2A. The flat portion 1220 may be flat independently of a state of a foldable electronic device (e.g., the foldable electronic device 200 of FIG. 2A). The bending portion 1210 may be substantially flat when the foldable electronic device is in a folded state, and may be at least partially bent when the foldable electronic device is in an unfolded state or a partially folded state. According to an embodiment, the support member 320 may be disposed under a surface of the display panel 310 (e.g., in a -z direction). The support member 320 may include a first support portion 1231 supporting the bending portion 1210 and a second support portion 1232 supporting the flat portion 1220. The first support portion 1231 may be referred to as a flexible region, and the second support portion 1232 may be referred to as a plurality of rigid regions. The flexible region may be disposed between the plurality of rigid regions.

According to an embodiment, the second support portion 1232 (or the plurality of rigid regions) may include a first flat layer 1241, and a second flat layer 1242. The first flat layer 1241 may be disposed under the flat portion 1220. The first flat layer 1241 may have first tensile modulus. The second flat layer 1242 may be disposed between the first flat layer 1241 and the flat portion 1220. The second flat layer 1242 may have second tensile modulus smaller than the first tensile modulus. For example, the first flat layer 1241 may correspond to a portion (e.g., the first region 1110 or the second region 1120 of FIG. 11) of the above-described second layer (e.g., the second layer 520 of FIG. 11), and the second flat layer 1242 may correspond to a portion of the above-described first layer (e.g., the first layer 510 of FIG. 11).

According to an embodiment, the first flat layer 1241 may comprise one or more first fibers (e.g., the second carbon fibers 522 of FIG. 5) formed in a longitudinal direction (e.g., the y-axis direction) of the bending portion 1210. The second flat layer 1242 may comprise one or more second fibers (e.g., the first carbon fibers 512 of FIG. 5) formed in a direction (e.g., the x-axis direction) substantially perpendicular to the longitudinal direction. For example, a direction in which one or more first fibers are arranged and a direction in which one or more second fibers are arranged may be perpendicular to each other. The direction in which one or more first fibers are arranged may be perpendicular to a direction of a folding axis of a first housing part and a second housing part, and the direction in which one or more second fibers are arranged may be parallel to the direction of the folding axis.

According to an embodiment, the first flat layer 1241 may include a second CFRP (e.g., a pitch based CFRP). The second flat layer 1242 may include a first CFRP (e.g., a PAN based CFRP). For example, the second tensile modulus of the second CFRP may be higher than the first tensile modulus of the first CFRP. As described above, since the pitch based CFRP is greater than the PAN based CFRP, a thickness of the first flat layer 1241 may be greater than a thickness of the second flat layer 1242. For example, tensile modulus of the pitch based CFRP may be approximately 500 GPa to approximately 900 GPa, and tensile modulus of the PAN based CFRP may be approximately 200 GPa to approximately 400 GPa.

According to an embodiment, the first support portion 1231 (e.g., at least one flexible region) may include a first bending layer 1251 substantially horizontal to the first flat layer 1241 and having a third tensile modulus, and a second bending layer 1252 substantially horizontal to the second flat layer 1242 and having a fourth tensile modulus. For example, the first bending layer 1251 may be connected to the first flat layer 1241, and the second bending layer 1252 may be connected to the second flat layer 1242. For example, the first bending layer 1251 and the first flat layer 1241 may be connected through processing and be configured as one layer. For example, the first bending layer 1251 may include a third CFRP (e.g., a pitch based CFRP). The second bending layer 1252 may include a fourth CFRP (e.g., a PAN based CFRP). The third tensile modulus and the fourth tensile modulus may be substantially identical to the first tensile modulus. However, the present disclosure is not limited thereto. For example, the first support portion 1231 may include the first bending layer 1251 substantially horizontal to the first flat layer 1241 and having third tensile modulus smaller than the first tensile modulus. For example, the third tensile modulus may be substantially equal to the second tensile modulus.

According to an embodiment, the bending portion 1210 may include at least one pattern 1260 formed therein. For example, the at least one pattern 1260 may be referred to as a lattice pattern formed by a plurality of slits (e.g., the plurality of slits 320a of FIG. 3). The at least one pattern may be formed by the plurality of slits 320a entirely penetrating the bending portion 1210. For example, the plurality of slits 320a may penetrate the entire bending portion 1210. However, the present disclosure is not limited thereto. For example, the at least one pattern may be formed in the first bending layer 1251 and may not be formed in the second bending layer 1252. As described above, for example, the plurality of slits 320a may completely penetrate the first bending layer 1251, and pass through a portion or all of the second bending layer 1252, but not pass through a third bending layer 1253. For example, the plurality of slits 320a may be formed in the third bending layer 1253 and may not be formed in the first bending layer 1251. The plurality of slits 320a may penetrate a portion or all of the second bending layer 1252. The at least one pattern may be formed in at least one of the first bending layer 1251, the second bending layer 1252, and the third bending layer 1253 to be described later.

According to an embodiment, the second support portion 1232 may include a third flat layer 1243 disposed under the first flat layer 1241 and having a fifth tensile modulus smaller than the first tensile modulus. The first support portion 1231 may include the third bending layer 1253 substantially horizontal to the third flat layer 1243. For example, the third flat layer 1243 may include a fifth CFRP (e.g., a PAN based CFRP). For example, the second flat layer 1242 and the third flat layer 1243 may include the same PAN based CFRP. In this case, the fifth tensile modulus of the third flat layer 1243 may be substantially the same as the second tensile modulus. For example, the third flat layer 1243 may correspond to a portion of the above-described third layer (e.g., the third layer 530 of FIG. 5).

According to an embodiment, the third flat layer 1243 may comprise one or more third fibers (e.g., the third carbon fibers 532 of FIG.5) formed in the direction (e.g., the x-axis direction) substantially perpendicular to the longitudinal direction (e.g., the y-axis direction) of the bending portion 1210.

According to an embodiment, the first support portion 1231 may include a third bending layer 1253 disposed under the first bending layer 1251 and substantially horizontal to the third flat layer 1243. According to an embodiment, the first support portion 1231 may include the first bending layer 1251, the second bending layer 1252, and the third bending layer 1253 that are substantially horizontal to the first flat layer 1241, the second flat layer 1242, and the third flat layer 1243, respectively. As a non-limiting example, a tensile modulus of the first bending layer 1251, a tensile modulus of the second bending layer 1252, and a tensile modulus of the third bending layer 1253 may be substantially identical to each other. As a non-limiting example, the tensile modulus of the second bending layer 1252 and the tensile modulus of the third bending layer 1253 may be smaller than the tensile modulus of the first bending layer 1251. For example, the tensile modulus of the second bending layer 1252 and the tensile modulus of the third bending layer 1253 may be substantially identical to each other. Terms described with reference to FIG. 12 are exemplary, and the present disclosure is not limited thereto. For example, the first support portion 1231 may be referred to as at least one flexible region 1231, and the second support portion 1232 may be referred to as a plurality of rigid regions 1232. The at least one flexible region 1231 may be disposed between the plurality of rigid regions 1232. For example, the second flat layer 1242 may be referred to as a first layer portion (e.g., a portion of the first layer 510 of FIG. 5), the first flat layer 1241 may be referred to as a second layer portion (e.g., a portion of the second layer 520 of FIG. 5), and the third flat layer 1243 may be referred to as a third layer portion (e.g., a portion of the third layer 530 of FIG. 5). For example, the second bending layer 1252 may be referred to as a first layer portion (e.g., another portion of the first layer 510 of FIG. 5), the first bending layer 1251 may be referred to as a second layer portion (e.g., another portion of the second layer 520 of FIG. 5), and the third bending layer 1253 may be referred to as a third layer portion (e.g., another portion of the third layer 530 of FIG. 5). The first layer portion 1242 of the plurality of rigid regions 1232 and the first layer portion 1252 of the at least one flexible area 1231 may be integrally formed. The second layer portion 1241 of the plurality of rigid regions 1232 and the second layer portion 1251 of the at least one flexible area 1231 may be integrally formed. The third layer portion 1243 of the plurality of rigid regions 1232 and the third layer portion 1253 of the at least one flexible area 1231 may be integrally formed. For example, a tensile modulus of the first flat layer 1241 (e.g., the second layer portion) may be higher than a tensile modulus of the second flat layer 1242 (e.g., the first layer portion) and a tensile modulus of the third flat layer 1243 (e.g., the third layer portion).

The descriptions of FIG. 12 set forth above may be described using the following terms, without limiting the scope of the present disclosure.

Referring to FIG. 12, the support plate (320) may include a plurality of rigid regions (1220) and at least one flexible region (1210). Each of the plurality of rigid regions (1220) of the support plate (320) may include a first layer portion (1242) comprising a first CFRP, a second layer portion (1241) stacked under the first layer portion (1242) of the plurality of rigid regions (1220) and comprising a second CFRP, and a third layer portion (1243) stacked under the second layer portion (1241) of the plurality of rigid regions (1220) and comprising a third CFRP. A tensile modulus of the second CFRP may be higher than a tensile modulus of the first CFRP and a tensile modulus of the third CFRP.

According to one embodiment, the at least one flexible region (1210) of the support plate (320) may include a first layer portion (1252) comprising the first CFRP, a second layer portion (1251) stacked under the first layer portion (1252) of the at least one flexible region (1210) and comprising a fourth CFRP, and a third layer portion (1253) stacked under the second layer portion (1251) of the at least one flexible region (1210) and comprising the third CFRP.

According to one embodiment, a tensile modulus of the fourth CFRP may be substantially equal to a tensile modulus of the first CFRP. According to one embodiment, a toughness of the fourth CFRP may be higher than a toughness of the second CFRP.

According to one embodiment, a tensile modulus of the second CFRP may be higher than a tensile modulus of the first CFRP and a tensile modulus of the third CFRP.

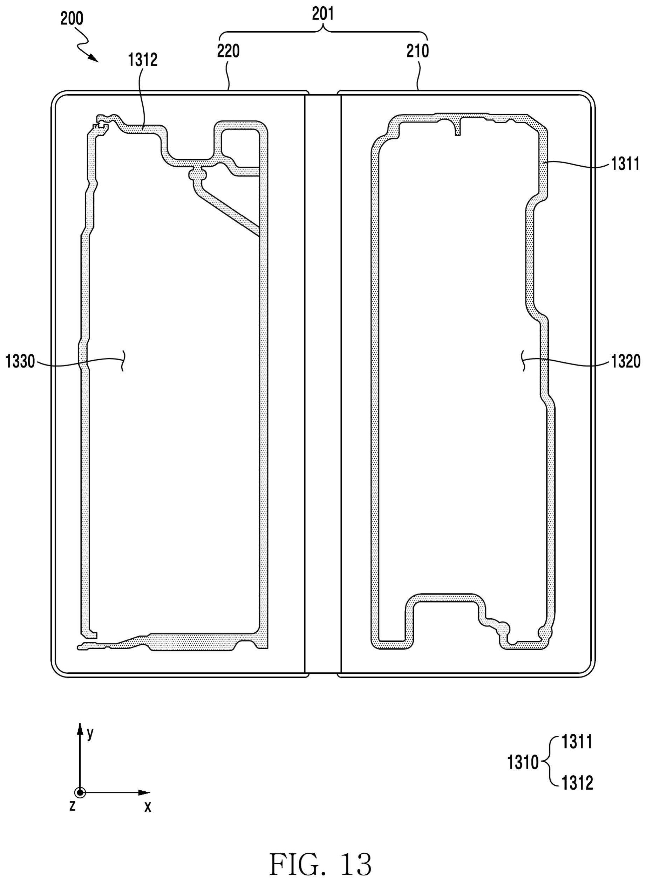

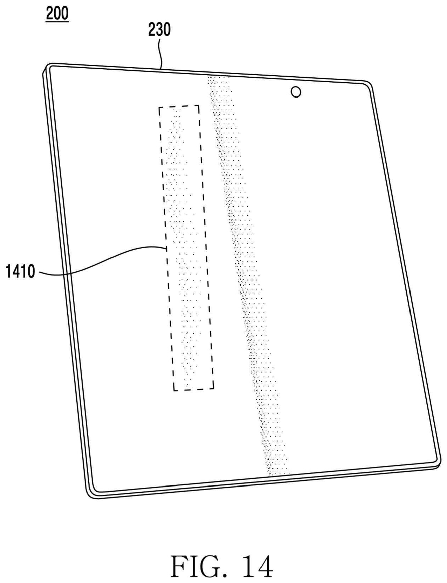

FIG. 13 illustrates a foldable housing to which a waterproof tape is attached. FIG. 14 is a perspective view of a foldable electronic device.

Referring to FIG. 13, a foldable electronic device 200 may include a waterproof tape 1310. For example, the waterproof tape 1310 may be disposed between a foldable housing 201 and a flexible display (e.g., the flexible display 230 of FIG. 2C). For example, in the foldable electronic device 200 illustrated in FIG. 13 from which the flexible display 230 is omitted, the waterproof tape 1310 may be disposed on a surface (e.g., a surface facing a +z direction) of the foldable housing 201 facing the flexible display 230.

According to an embodiment, the waterproof tape 1310 may include a first waterproof tape 1311 disposed on a first housing part 210 and a second waterproof tape 1312 disposed on a second housing part 220. Each of the first waterproof tape 1311 and the second waterproof tape 1312 may be disposed to form a closed-loop. A first region 1320 surrounded by the first waterproof tape 1311 may form a first waterproof region, and a second region 1330 surrounded by the second waterproof tape 1312 may form a second waterproof region. When moisture flows into the foldable electronic device 200, the first waterproof tape 1311 may reduce or block an inflow of moisture into the first waterproof region, and the second waterproof tape 1312 may reduce or block an inflow of moisture into the second waterproof region. Electronic components disposed in the first waterproof region and electronic components disposed in the second waterproof region may be protected from moisture.

The foldable electronic device 200 according to an embodiment may include a support plate (e.g., the support plate 320 of FIG. 4A) including a pitch based CFRP. In order to support a display panel (e.g., the display panel 310 of FIG. 4A), the support plate 320 including the pitch based CFRP may be disposed under the display panel 310 (e.g., in a -z direction). Since the flexible display 230 is disposed on the foldable housing 201, the support plate 320 may be positioned above the waterproof tape 1310 (e.g., in the +z direction). Since the support plate 320 including the pitch based CFRP has high tensile modulus, strain of the support plate 320 may be reduced. For example, since the strain of the support plate 320 does not occur even when the waterproof tape 1310 presses the flexible display 230 from below, a surface quality of the flexible display 230 may be improved.

When the flexible display 230 is disposed on the foldable housing 201 illustrated in FIG. 13, the waterproof tape 1310 may be positioned under the flexible display 230 (e.g., in the -z direction). In a case that the tensile modulus of the support plate 320 is low, the surface quality of the flexible display 230 may be deteriorated by a thickness of the waterproof tape 1310. Referring to FIG. 14, a partial region 1410 of a front surface of the flexible display 230 overlapping a waterproof tape (e.g., the waterproof tape 1310 of FIG. 13) may be uneven or wrinkled by the waterproof tape 1310.

According to an embodiment, since the support plate 320 may include a second CFRP (e.g., the second CFRP 521 of FIG. 5) (e.g., the pitch based CFRP) having high tensile modulus, the support plate 320 may include high bending stiffness. In a case that bending stiffness of the support plate 320 is high, deterioration of the surface quality by the waterproof tape 1310 may be reduced. For example, in a case that the bending stiffness of the support plate 320 is high, the surface quality of the flexible display 230 may be improved, since a probability of a wrinkle of the flexible display 230 occurring by the waterproof tape 1310 is low. For example, when the support plate 320 includes the second layer (e.g., the second layer 520 of FIG. 11) illustrated in FIG. 11, a first region (e.g., the first region 1110 of FIG. 11) of the second layer 520 may overlap the first waterproof tape 1311 and a second region (e.g., the second region 1120 of FIG. 11) of the second layer 520 may overlap the second waterproof tape 1312. Since the first region 1110 and the second region 1120 include the second CFRP 521 having the high tensile modulus, deterioration of the surface quality by the first waterproof tape 1311 and the second waterproof tape 1312 may be reduced.

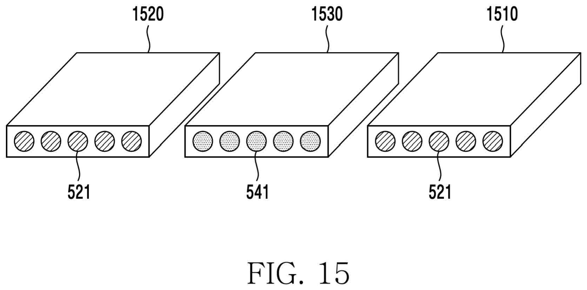

FIGS. 15, 16, 17, 18, and 19 illustrate manufacturing processes of the support plate including the second layer of FIG. 11.

As described with reference to FIG. 11, the second layer (e.g., the second layer 520 of FIG. 11) may include a first region (e.g., the first region 1110 of FIG. 11), a second region (e.g., the second region 1120 of FIG. 11), and a third region (e.g., the third region 1130 of FIG. 11). The first region 1110 and the second region 1120 may include a second CFRP 521. The third region 1130 may include a fourth CFRP 541 different from the second CFRP 521. For example, the fourth CFRP 541 may be equal to a first CFRP (e.g., the first CFRP 511 of FIG. 11) of a first layer (e.g., the first layer 510 of FIG. 11) or a third CFRP (e.g., the third CFRP 531 of FIG. 11) of a third layer (e.g., the third layer 530 of FIG. 11), but is not limited thereto.

FIG. 15 illustrates prepregs for manufacturing the second layer 520. Referring to FIG. 15, the first region (e.g., the first region 1110 of FIG. 11), the second region (e.g., the second region 1120 of FIG. 11), and the third region (e.g., the third region 1130 of FIG. 11) may be respectively manufactured. For example, prepregs including carbon fibers may be manufactured to manufacture the first region 1110, the second region 1120, and the third region 1130. The prepregs may include carbon fibers impregnated with resin.

For example, a first prepreg 1510 to be the first region 1110, a second prepreg 1520 to be the second region 1120, and a third prepreg 1530 to be the third region 1130 may be respectively manufactured. The first prepreg 1510 and the second prepreg 1520 may include the second CFRP 521, and the third prepreg 1530 may include the fourth CFRP 541. The first prepreg 1510 may be cut to match a size of the first region 1110, the second prepreg 1520 may be cut to match a size of the second region 1120, and the third prepreg 1530 may be cut to match a size of the third region 1130.

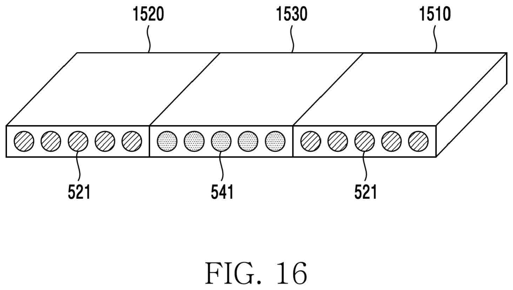

FIG. 16 illustrates an adhesion process. Referring to FIG. 16, prepregs may be adhered to each other. Since a third region (e.g., the third region 1130 of FIG. 11) is positioned between a first region (e.g., the first region 1110 of FIG. 11) and a second region (e.g., the second region 1120 of FIG. 11), the third prepreg 1530 may be coupled between the first prepreg 1510 and the second prepreg 1520. The adhesion process may be performed through a process of curing resin of the prepregs. In a state in which the third prepreg 1530 is in contact with a side of the first prepreg 1510, and the second prepreg 1520 is in contact with a side of the third prepreg 1530, the prepregs may be cured. As the resin is cured during a curing process, the prepregs may be adhered to each other. For example, the third prepreg 1530 may be adhered to a side of the first prepreg 1510, and the second prepreg 1520 may be adhered to a side of the third prepreg 1530. After the prepregs are adhered, the prepregs may be molded in a high-temperature environment.

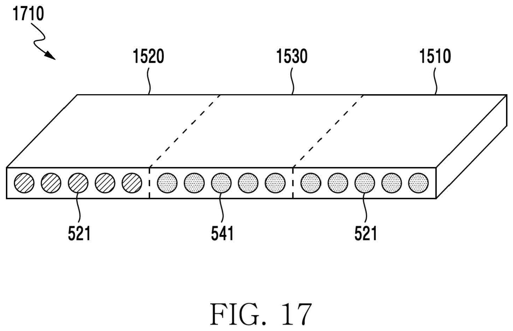

FIG. 17 illustrates a prepreg 1710 formed through a molding process. Referring to FIG. 17, the prepreg 1710 in which the first prepreg 1510, the second prepreg 1520, and the third prepreg 1530 are integrally formed may be manufactured through the molding process.

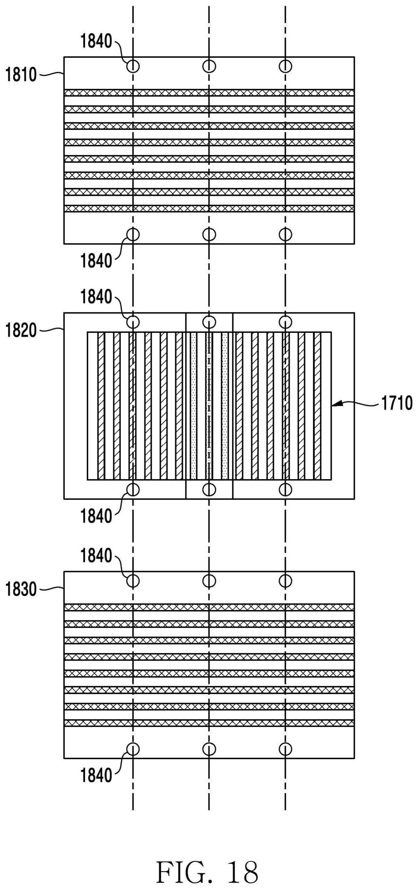

FIG. 18 illustrates jigs for cutting the prepreg 1710. Referring to FIG. 18, the manufactured prepreg 1710 may be cut. In a cutting process, the jigs may be used so that the prepreg 1710 may have a size suitable for a size of a flexible display (e.g., the flexible display 230 of FIG. 2C). For example, the molded prepreg 1710 may be disposed in a middle jig 1820 between an upper jig 1810 and a lower jig 1830. The upper jig 1810 and the lower jig 1830 may include holes for alignment with respect to regions (e.g., a region corresponding to the first region (e.g., the first region 1110) of FIG. 11, a region corresponding to the second region (e.g., the second region 1120 of FIG. 11), and a region corresponding to the third region (e.g., the third region 1130 of FIG. 11)) of the prepreg. In a state in which the prepreg 1710 is aligned with the jigs, the prepreg 1710 is cut to match a size of a second layer (e.g., the second layer 520 of FIG. 11), so that the second layer 520 may be manufactured.

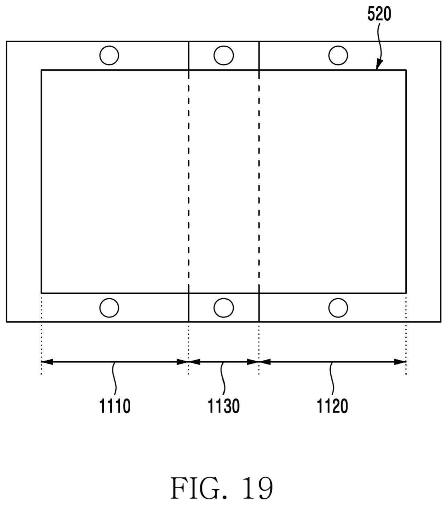

FIG. 19 illustrates the second layer 520 manufactured through the processes. Referring to FIG. 19, the second layer 520 may include the first region 1110 formed by a first prepreg (e.g., the first prepreg 1510 of FIG. 15), the second region 1120 formed by a second prepreg (e.g., the second prepreg 1520 of FIG. 15), and the third region 1130 formed by a third prepreg (e.g., the third prepreg 1530 of FIG. 15). The second layer 520 may be manufactured through the above-described manufacturing processes.

According to an embodiment, since the bent third region 1130 has relatively high toughness and relatively low tensile modulus, a support plate (e.g., the support plate 320 of FIG. 4B) may be naturally bent, and damage to a plurality of slits (e.g., the plurality of slits 320a of FIG. 4B) may be reduced. Since the first region 1110 and the second region 1120, which are substantially flat, have relatively high tensile modulus and relatively low toughness, the support plate 320 may firmly support a display panel (e.g., the display panel 310 of FIG. 4A), and may reduce deterioration of a surface quality of a flexible display (e.g., the flexible display 230 of FIG. 2C).

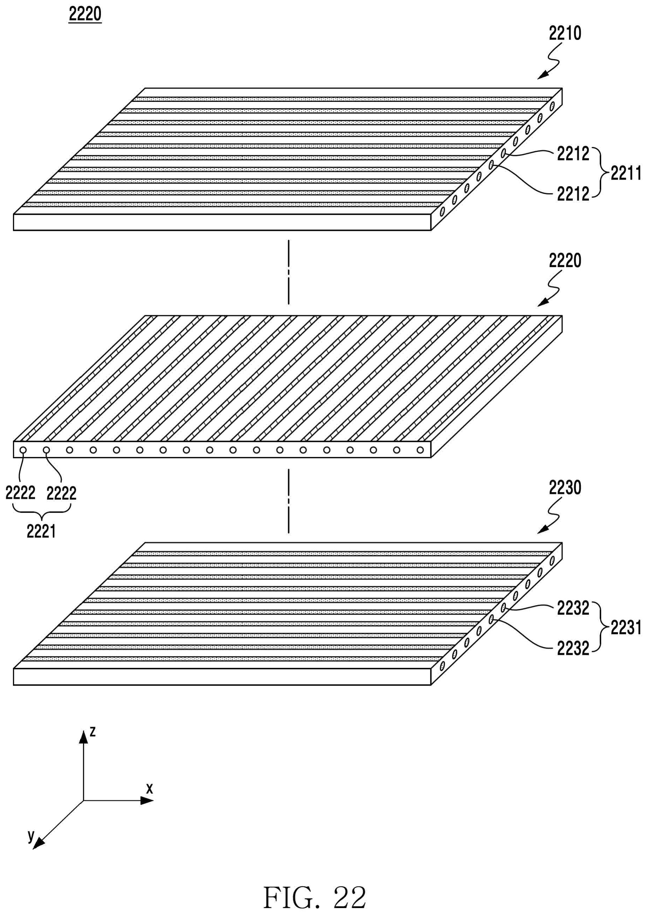

In the above-described foldable electronic device (e.g., the foldable electronic device 200 of FIG. 2A), a foldable housing (e.g., the foldable housing 201 of FIG. 2A) including two housing parts (e.g., the first housing part 210 and the second housing part 220 of FIG. 2A) has been described, but the foldable electronic device according to the present disclosure is not limited thereto. As will be described later, a foldable electronic device (e.g., a foldable electronic device 2000 of FIG. 20) may include three housing parts. The foldable electronic device 2000 including the three housing parts may be referred to as a multi-foldable electronic device. The foldable electronic device 2000 including the three housing parts may include a support plate corresponding to the above-described support plate (e.g., the support plate 320 of FIGS. 5, 6, 10, or 11). The above-described descriptions of the support plate may be substantially equally applied to the support plate (e.g., a support plate 2200 of FIG. 22) of the foldable electronic device 2000 to be described later. Overlapping descriptions may be omitted or briefly described.

Hereinafter, the foldable electronic device 2000 including three housing parts will be described.

FIG. 20 illustrates states of a foldable electronic device according to an embodiment.

Referring to FIG. 20, a foldable electronic device 2000 (e.g., the electronic device 101 of FIG. 1) according to an embodiment may include a plurality of housing parts rotatably coupled. For example, the foldable electronic device 2000 may include a first housing part 2010, a second housing part 2020, and a third housing part 2030. The first housing part 2010 and the second housing part 2020 may be rotatably connected to each other. The second housing part 2020 and the third housing part 2030 may be rotatably connected to each other. The foldable electronic device 2000 may include a first hinge assembly 2050 rotatably connecting the first housing part 2010 and the second housing part 2020 and a second hinge assembly 2060 rotatably connecting the second housing part 2020 and the third housing part 2030.

According to an embodiment, the first housing part 2010 may be rotatably coupled to a side of the second housing part 2020. For example, the first housing part 2010 and the second housing part 2020 may be rotatably connected to each other with respect to a first folding axis f1. The third housing part 2030 may be rotatably coupled to another side of the second housing part 2020. For example, the second housing part 2020 and the third housing part 2030 may be rotatably connected to each other with respect to a second folding axis f2. The foldable electronic device 2000 may include the first hinge assembly 2050 that rotatably couples the first housing part 2010 to the side of the second housing part 2020 and the second hinge assembly 2060 that rotatably couples the third housing part 2030 to the other side of the second housing part 2020. The foldable electronic device 2000 may have a structure that may be folded twice by the first hinge assembly 2050 and the second hinge assembly 2060. In terms of the structure that may be folded twice, the foldable electronic device 2000 may be referred to as a multi-foldable electronic device.

The foldable electronic device 2000 according to an embodiment may include a flexible display 2040. In a case that the foldable housing 201 is folded or unfolded, the flexible display 2040 may also be folded or unfolded.

A first state 2000a of FIG. 20 may be referred to as an unfolded state of the foldable electronic device 2000. The first state 2000a may indicate a state in which the first housing part 2010, the second housing part 2020, and the third housing part 2030 are fully unfolded. In the unfolded state of the foldable electronic device 2000, the first housing part 2010, the second housing part 2020, and the third housing part 2030 may be disposed on substantially the same plane. The first state 2000a may also be referred to as an opened state, a flat state, and/or an outspread state in terms of the first housing part 2010, the second housing part 2020, and the third housing part 2030 being fully unfolded. When the foldable electronic device 2000 is in the first state 2000a, the second housing part 2020 may be positioned between the first housing part 2010 and the third housing part 2030.

A second state 2000b of FIG. 20 may indicate a state in which the first housing part 2010 is folded with respect to the second housing part 2020, and the third housing part 2030 is not folded with respect to the second housing part 2020. For example, in the first state 2000a, as the first housing part 2010 rotates with respect to the second housing part 2020, the foldable electronic device 2000 may be changed from the first state 2000a to the second state 2000b. For example, the first housing part 2010 may rotate in a first rotational direction (e.g., counterclockwise) with respect to the second housing part 2020 through the first hinge assembly 2050. When the first housing part 2010 is rotated approximately 180 degrees, the second state 2000b in which the first housing part 2010 is placed above the second housing part 2020 may be provided. The second state 2000b may be referred to as a sub-unfolded state, a sub-folded state, a partially unfolded state, and/or a partially folded state.

A third state 2000c of FIG. 20 may be referred to as a folded state of the foldable electronic device 2000. The third state 2000c may indicate a state in which the first housing part 2010, the second housing part 2020, and the third housing part 2030 are fully folded. When the foldable electronic device 2000 in the folded state is viewed from above, the second housing part 2020, the first housing part 2010, and the third housing part 2030 may overlap each other. For example, in the second state 2000b, as the third housing part 2030 rotates with respect to the second housing part 2020, the foldable electronic device 2000 may be changed from the second state 2000b to the third state 2000c. For example, the third housing part 2030 may rotate in a second rotational direction (e.g., clockwise) opposite to the first rotational direction with respect to the second housing part 2020 through the second hinge assembly 2060. In the second state 2000b, when the third housing part 2030 is rotated approximately 180 degrees, the third state 2000c in which the third housing part 2030 is placed above the first housing part 2010 may be provided. In the third state 2000c, the flexible display 2040 may not be exposed to the outside of the foldable electronic device 2000 by being covered by the second housing part 2020, the first housing part 2010, and/or the third housing part 2030. In the third state 2000c, the first housing part 2010 may be positioned between the second housing part 2020 and the third housing part 2030. In the third state, a sub-display 2040 disposed in the third housing part 2030 may be exposed to the outside. The third state 2000c may be referred to as a closed state in terms of the first housing part 2010, the second housing part 2020, and the third housing part 2030 being fully folded.

According to an embodiment, the first hinge assembly 2050 may be different from the second hinge assembly 2060. For example, in the third state 2000c, the second hinge assembly 2060 may have a wider width than the first hinge assembly 2050, so that the first housing part 2010 may be positioned between the second housing part 2020 and the third housing part 2030. In terms of having different widths, the first hinge assembly 2050 may be referred to as a narrow hinge, and the second hinge assembly 2060 may be referred to as a wide hinge.

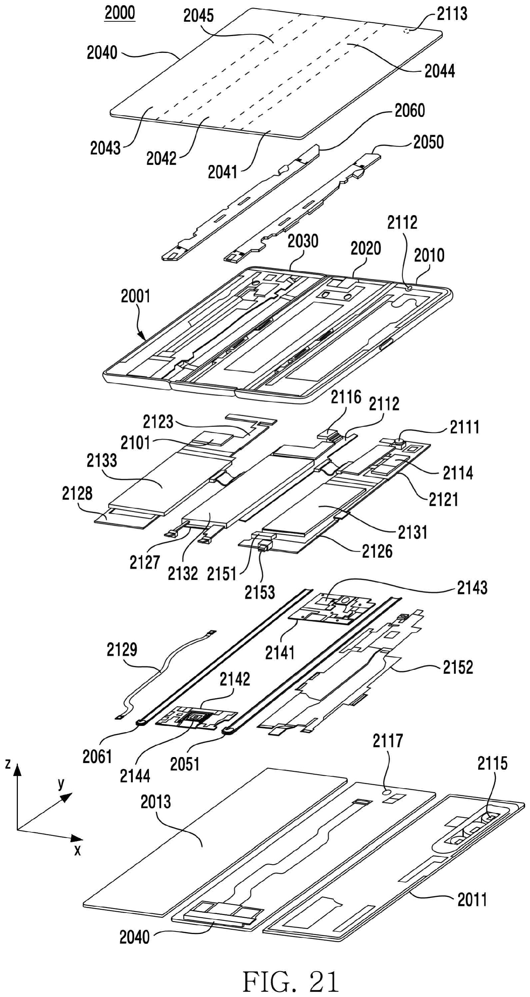

FIG. 21 is an exploded perspective view of a foldable electronic device according to an embodiment.

Referring to FIG. 21, a foldable electronic device 2000 may include a first rear plate 2011, a sub-display 2040, and a second rear plate 2013 that are defining a rear surface of the foldable electronic device 2000. The first rear plate 2011 may cover a rear surface of a first housing part 2010. The second rear plate 2013 may cover a rear surface of a third housing part 2030. The sub-display 2040 may cover a rear surface of a second housing part 2020. When the foldable electronic device 2000 is in a folded state (e.g., the third state 2000c of FIG. 20), the sub-display 2040 may be visible from the outside of the foldable electronic device 2000. When the foldable electronic device 2000 is in the folded state, since a flexible display 2040 is covered by a foldable housing 2001, the foldable electronic device 2000 may provide visual information through the sub-display 2040.

According to an embodiment, the flexible display 2040 may be disposed above the foldable housing 2001 (e.g., in a +z direction). The flexible display 2040 may include a first portion 2041, a second portion 2042, a third portion 2043, a fourth portion 2044, and a fifth portion 2045. For example, the first portion 2041 may be disposed on a front surface of the first housing part 2010 and may be supported by the first housing part 2010. The second portion 2042 may be disposed on a front surface of the second housing part 2020 and may be supported by the second housing part 2020. The third portion 2043 may be disposed on a front surface of the third housing part 2030 and may be supported by the third housing part 2030. The fourth portion 2044 may be disposed between the first portion 2041 and the second portion 2042. For example, the fourth portion 2044 may be disposed on a first hinge assembly 2050. The fifth portion 2045 may be disposed between the second portion 2042 and the third portion 2043. For example, the fifth portion 2045 may be disposed on a second hinge assembly 2060.

According to an embodiment, the fourth portion 2044 of the flexible display 2040 may be bent based on a state of the foldable electronic device 2000. For example, when the foldable electronic device 2000 is in an unfolded state (e.g., the first state 2000a of FIG. 20), a direction in which the first portion 2041 faces may be substantially equal to a direction in which the second portion 2042 faces. The fourth portion 2044 disposed between the first portion 2041 and the second portion 2042 may be substantially flat when the foldable electronic device 2000 is in the unfolded state. For example, when the foldable electronic device 2000 is in a partially folded state (e.g., the second state of FIG. 20) or the folded state (e.g., the third state of FIG. 20), the first portion 2041 may face the second portion 2042. At least a portion of the fourth portion 2044 disposed between the first portion 2041 and the second portion 2042 may be bent when the foldable electronic device 2000 is in the partially folded state or the folded state.

According to an embodiment, the fifth portion 2045 of the flexible display 2040 may be bent based on the state of the foldable electronic device 2000. For example, when the foldable electronic device 2000 is within the unfolded state or the partially folded state, the direction in which the second portion 2042 faces may be substantially equal to a direction in which the third portion 2043 faces. The fifth portion 2045 disposed between the second portion 2042 and the third portion 2043 may be substantially flat when the foldable electronic device 2000 is in the unfolded state or the partially folded state. For example, when the foldable electronic device 2000 is in the folded state, the second portion 2042 may face the third portion 2043. At least a portion of the fifth portion 2045 disposed between the second portion 2042 and the third portion 2043 may be bent when the foldable electronic device 2000 is in the folded state. A width of the fifth portion 2045 may be wider than a width of the fourth portion 2044.

According to an embodiment, the foldable electronic device 2000 may include a first camera 2111 overlapping the flexible display 2040. For example, the first camera 2111 may be disposed under the third portion 2043 of the flexible display 2040 (e.g., in a -z direction). The first camera 2111 may be disposed to face a front side of the foldable electronic device 2000 (e.g., in the +z direction). The foldable housing 2001 and the flexible display 2040 may include holes for providing light to a lens of the first camera 2111. For example, the third housing part 2030 of the foldable housing 2001 may include a hole 2112 aligned with the first camera 2111 and the third portion 2043 of the flexible display 2040 may include a hole 2113 aligned with the first camera 2111. The first camera 2111 may be referred to as a front camera in terms of facing the front side of the foldable electronic device 2000. The first camera 2111 may be referred to as an under display camera (UDC) in terms of overlapping the flexible display 2040.

According to an embodiment, the foldable electronic device 2000 may include at least one second camera 2114 facing a rear side of the foldable electronic device 2000 (e.g., in the -z direction). For example, the at least one second camera 2114 may include a wide-angle camera, an ultra-wide-angle camera, and/or a telephoto camera. The foldable housing 2001 may include holes for providing light to a lens of the at least one second camera 2114. For example, the second rear plate 2013 covering the rear surface of the third housing part 2030 may include at least one opening 2115 aligned with the at least one second camera 2114.

According to an embodiment, the foldable electronic device 2000 may include a third camera 2116 facing the rear side of the foldable electronic device 2000 and overlapping the sub-display 2040. The third camera 2116 may be used when the foldable electronic device 2000 is in the folded state. For example, when the foldable electronic device 2000 is in the folded state, a lens of the third camera 2116 may be configured to receive light through a hole 2117 of the sub-display 2040 aligned with the third camera 2116 and generate image data.

The foldable electronic device 2000 according to an embodiment may include printed circuit boards. For example, the foldable electronic device 2000 may include a first printed circuit board 2121 disposed in the first housing part 2010, a second printed circuit board 2122 disposed in the second housing part 2020, and a third printed circuit board 2123 disposed in the third housing part 2030. Each of the printed circuit boards may include conductive layers and non-conductive layers alternating with the conductive layers. The printed circuit boards may be configured to provide an electrical connection between electronic components through the conductive layers. For example, the first camera 2111 and the at least one second camera 2114 may be disposed on the third printed circuit board 2123. The third camera 2116 may be disposed on the second printed circuit board 2122. A subscriber identity module (SIM) socket 2101 may be disposed on the first printed circuit board 2121.

According to an embodiment, the first printed circuit board 2121 and the second printed circuit board 2122 may be electrically connected through a first flexible printed circuit board 2124. The second printed circuit board 2122 and the third printed circuit board 2123 may be electrically connected through a second flexible printed circuit board 2125. The foldable electronic device 2000 may include sub-printed circuit boards electrically connected to each of the printed circuit boards. For example, the foldable electronic device 2000 may include a first sub-printed circuit board 2126 electrically connected to the first printed circuit board 2121 and disposed in the first housing part 2010, a second sub-printed circuit board 2127 electrically connected to the second printed circuit board 2122 and disposed in the second housing part 2020, and a third sub-printed circuit board 2128 electrically connected to the third printed circuit board 2123 and disposed in the third housing part 2030. For example, each of main printed circuit boards may be connected to each of sub-printed circuit boards through a connecting member (e.g., a flexible printed circuit board). For example, the second printed circuit board 2122 and the second sub-printed circuit board 2127 may be electrically connected to each other through a third flexible printed circuit board 2129. The printed circuit boards may be adjacent to an upper portion (e.g., a portion in a +y direction) of the foldable housing 2001, and the sub-printed circuit boards may be adjacent to a lower portion (e.g., a portion in a -y direction) of the foldable housing 2001.

The foldable electronic device 2000 according to an embodiment may include batteries configured to store power and provide the stored power to electronic components of the foldable electronic device 2000. For example, the foldable electronic device 2000 may include a first battery 2131 disposed in the first housing part 2010, a second battery 2132 disposed in the second housing part 2020, and a third battery 2133 disposed in the third housing part 2030. Power management circuitry (e.g., the power management module 188 of FIG. 1) may be electrically connected to the first battery 2131, the second battery 2132, and the third battery 2133, respectively.

The foldable electronic device 2000 according to an embodiment may include hinge covers covering the hinge assemblies. For example, the foldable electronic device 2000 may include a first hinge cover 2051 covering the first hinge assembly 2050, and a second hinge cover 2052 covering the second hinge assembly 2060. The first hinge cover 2051 may be positioned between the first housing part 2010 and the second housing part 2020. The second hinge cover 2052 may be positioned between the second housing part 2020 and the third housing part 2030.

The foldable electronic device 2000 according to an embodiment may include support members disposed in the second housing part 2020. For example, the foldable electronic device 2000 may include a first support member 2141 adjacent to an upper portion of the second housing part 2020 and a second support member 2142 adjacent to a lower portion of the second housing part 2020. The first support member 2141 may support a rear surface of the second printed circuit board 2122, and the second support member 2142 may support a rear surface of the second sub-printed circuit board 2127. A first speaker 2143 may be disposed in the first support member 2141, and a second speaker 2144 may be disposed in the second support member 2142.

The foldable electronic device 2000 according to an embodiment may include electronic components for providing various functions of the foldable electronic device 2000. For example, the foldable electronic device 2000 may include a motor 2151 configured to provide a haptic notification, an antenna 2152 for short-range wireless communication, and/or a connector 2153 for connection to a terminal of an external electronic device. For example, the antenna 2152 may include a multi-function coil (MFC) antenna for near field communication (NFC) and magnetic secure transmission (MST). In addition, various electronic components (e.g., a microphone, a mmWave antenna module, or a sensor) may be disposed in the foldable housing 2001.

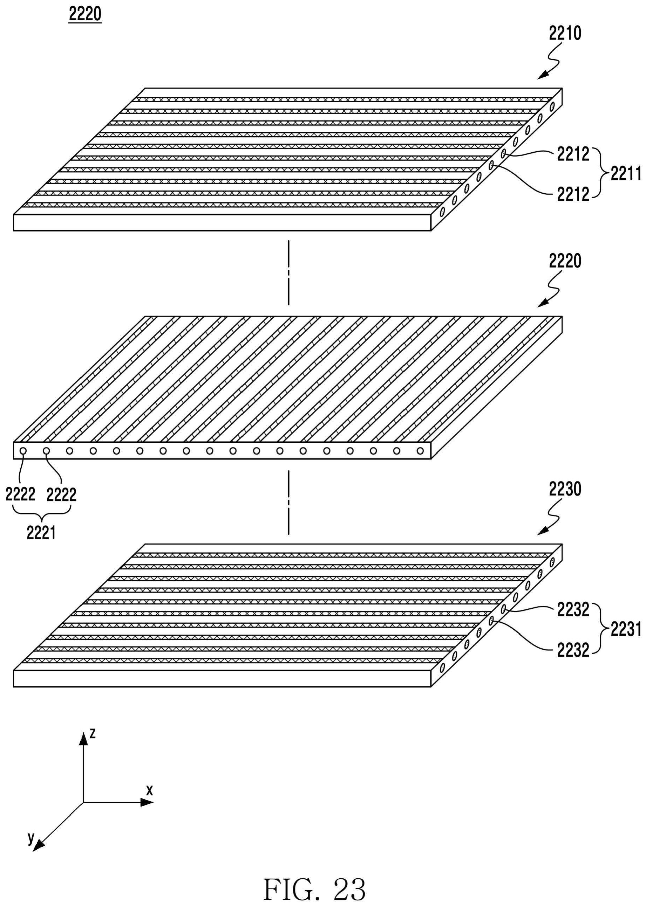

FIGS. 22 and 23 illustrate a support plate of a flexible display.

A support plate 2200 described with reference to FIGS. 22 and 23 is the support plate 2200 included in a flexible display (e.g., the flexible display 2040 of FIG. 20) of a foldable electronic device (e.g., the foldable electronic device 2000 of FIG. 20) including three housing parts. The support plate 2200 to be described later may be substantially equal to the support plate described above (e.g., the support plate 320 of FIG. 4B).

According to an embodiment, the support plate 2200 may be formed from a CFRP. The CFRP may be lightweight and may have high thermal conductivity and tensile modulus. The support plate 2200 according to an embodiment may include an odd number of layers stacked on each other. For example, the support plate 2200 may include a first layer 2210, a second layer 2220, and a third layer 2230. As described above, based on a middle layer, at least one upper layer and at least one lower layer may be symmetrical to each other.

According to an embodiment, the first layer 2210 may comprise a first CFRP 2211. The second layer 2220 may comprise a second CFRP 2221. The third layer 2230 may comprise a third CFRP 2231. The third CFRP 2231 may be equal to the first CFRP 2211. According to an embodiment, second tensile modulus of the second CFRP 2221 may be higher than first tensile modulus of the first CFRP 2211 and third tensile modulus of the third CFRP 2231. For example, the second CFRP 2221 may include a pitch based CFRP, and the first CFRP 2211 and the third CFRP 2231 may include a PAN based CFRP.

According to an embodiment, first carbon fibers 2212 of the first CFRP 2211 may be arranged in a first direction. For example, the first direction may be perpendicular to a direction (e.g., a y-axis direction) of folding axes (e.g., a first folding axis f1 and a second folding axis f2). Second carbon fibers 2222 of the second CFRP 2221 may be arranged in a second direction perpendicular to the first direction. For example, the second direction may be parallel to the direction of the folding axes. Third carbon fibers 2232 of the third CFRP 2231 may be arranged in the first direction. However, arrangement of carbon fibers is not limited thereto. Referring to FIG. 23, the first carbon fibers 2212 of the first CFRP 2211 and the third carbon fibers 2232 of the third CFRP 2231 may be arranged in the second direction parallel to the direction (e.g., the y-axis direction) of the folding axes, and the second carbon fibers 2222 of the second CFRP 2221 may be arranged in the first direction perpendicular to the direction of the folding axes.

The support plate 2200 according to an embodiment may provide high bending stiffness and high thermal conductivity. By the support plate 2200, heat dissipation performance of the foldable electronic device 2000 may be improved, and a surface quality of the flexible display 2040 may be improved.

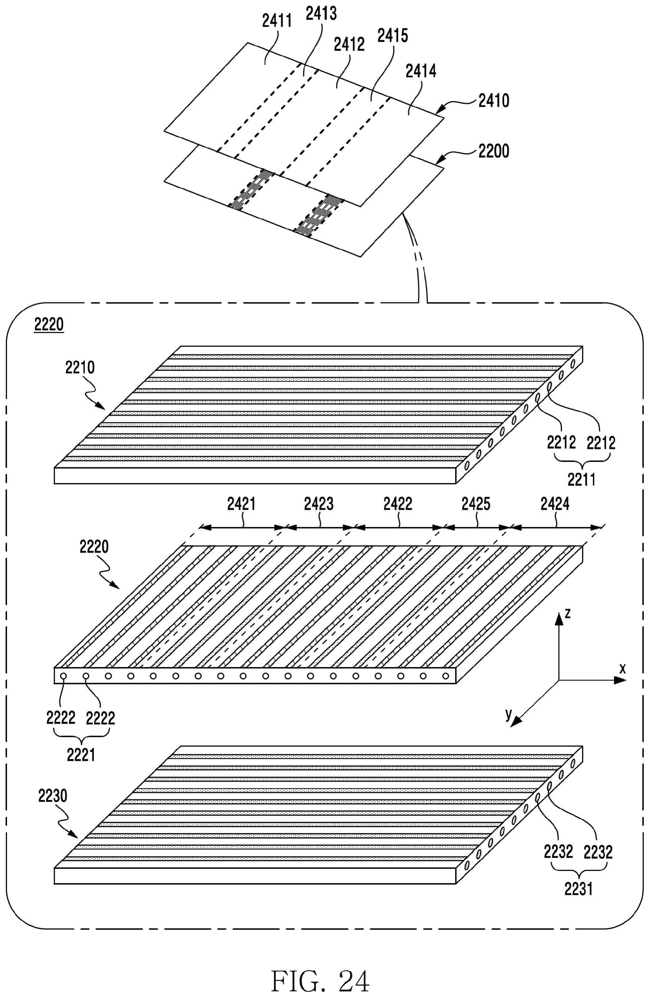

FIG. 24 is an exploded perspective view of a support plate including a second layer comprising different types of CFRPs.

A support plate 2200 described with reference to FIG. 24 is the support plate 2200 included in a flexible display (e.g., the flexible display 2040 of FIG. 20) of a foldable electronic device (e.g., the foldable electronic device 2000 of FIG. 20) including three housing parts. The support plate 2200 to be described later may be substantially equal to the support plate (e.g., the support plate 320 of FIG. 11) described with reference to FIG. 11, except that it further includes a fourth region 2424 and a fifth region 2425 to be described later.

Referring to FIG. 24, a display panel 2410 may include a first portion 2411, a second portion 2412, a third portion 2413, a fourth portion 2414, and a fifth portion 2415. For example, the first portion 2411 of the display panel 2410 may be a portion of the display panel 2410 supported by a first housing part (e.g., the first housing part 2010 of FIG. 20). The second portion 2412 of the display panel 2410 may be a portion of the display panel 2410 supported by a second housing part (e.g., the second housing part 2020 of FIG. 20). The third portion of the display panel 2410 may be disposed between the first portion 2411 and the second portion 2412. The fourth portion 2414 of the display panel 2410 may be a portion of the display panel 2410 supported by a third housing part (e.g., the third housing part 2030 of FIG. 20). The fifth portion of the display panel 2410 may be disposed between the second portion 2412 and the fourth portion 2414.

The first portion 2411, the second portion 2412, and the fourth portion 2414 may maintain a substantially flat shape independently of a state of the foldable electronic device 2000. For example, when the foldable electronic device 2000 is in a folded state, a partially folded state, or an unfolded state, the first portion 2411, the second portion 2412, and the fourth portion 2414 may be substantially flat without being bent. The third portion 2413 and the fifth portion 2415 may be substantially flat or at least partially bent based on the state of the foldable electronic device 2000. For example, the third portion 2413 may be bent when the first housing part 2010 and the second housing part 2020 are folded. For example, the fifth part 2415 may be bent when the second housing part 2020 and the third housing part 2030 are folded.

For example, in the unfolded state (e.g., the first state 2000a of FIG. 20) of the foldable electronic device 2000, the first portion 2411 of the display panel 2410 supported by the first housing part 2010 and the second portion 2412 of the display panel 2410 supported by the second housing part 2020 may be substantially flat. The third portion 2413 of the display panel 2410 between the first portion 2411 of the display panel 2410 and the second portion 2412 of the display panel 2410 may be substantially flat in the unfolded state of the foldable electronic device 2000.

For example, in the partially folded state (e.g., the second state 2000b of FIG. 20) or the folded state (e.g., the third state 2000c of FIG. 20) of the foldable electronic device 2000, the first housing part 2010 and the second housing part 2020 may overlap each other. The third portion 2413 of the display panel 2410 between the first portion 2411 of the display panel 2410 and the second portion 2412 of the display panel 2410 may be bent in the partially folded state or the folded state of the foldable electronic device 2000.

For example, in the unfolded state or the partially folded state of the foldable electronic device 2000, the second portion 2412 of the display panel 2410 supported by the second housing part 2020 and the fourth portion 2414 of the display panel 2410 supported by the third housing part 2030 may be substantially flat. The fifth portion 2415 of the display panel 2410 between the second portion 2412 of the display panel 2410 and the fourth portion 2414 of the display panel 2410 may be substantially flat in the unfolded state or the partially folded state of the foldable electronic device 2000.

For example, in the folded state of the foldable electronic device 2000, the second housing part 2020 and the third housing part 2030 may overlap each other. The fifth portion 2415 of the display panel 2410 between the second portion 2412 of the display panel 2410 and the fourth portion 2414 of the display panel 2410 may be bent in the folded state of the foldable electronic device 2000.

According to an embodiment, the support plate 2200 may include a first layer 2210, a second layer 2220, and a third layer 2230. The second layer 2220 may include a first region 2421, a second region 2422, a third region 2423, the fourth region 2424, and the fifth region 2425.

For example, the first region 2421 of the second layer 2220 may correspond to the first portion 2411 of the display panel 2410. When the flexible display 2040 is viewed from above, the first region 2421 may overlap the first portion 2411. The first region 2421 may support the first portion 2411. The second region 2422 of the second layer 2220 may correspond to the second portion 2412 of the display panel 2410. When the flexible display 2040 is viewed from above, the second region 2422 may overlap the second portion 2412. The second region 2422 may support the second portion 2412. The third region 2423 of the second layer 2220 may correspond to the third portion 2413 of the display panel 2410. When the flexible display 2040 is viewed from above, the third region 2423 may overlap the third portion 2413. The third region 2423 may support the third portion 2413. The fourth region 2424 of the second layer 2220 may correspond to the fourth portion 2414 of the display panel 2410. When the flexible display 2040 is viewed from above, the fourth region 2424 may overlap the fourth portion 2414. The fourth region 2424 may support the fourth portion 2414. The fifth region 2425 of the second layer 2220 may correspond to the fifth portion 2415 of the display panel 2410. When the flexible display 2040 is viewed from above, the fifth region 2425 may overlap the fifth portion 2415. The fifth region 2425 may support the fifth portion 2415.

As described above, since the first portion 2411, the second portion 2412, and the fourth portion 2414 are substantially flat independently of the state of the foldable electronic device 2000, the first region 2421, the second region 2422, and the fourth region 2424 may be substantially flat independently of the state of the foldable electronic device 2000. As described above, since the third portion 2413 and the fifth portion 2415 are at least partially bent based on the state of the foldable electronic device 2000, the third region 2423 and the fifth region 2425 may be at least partially bent based on the state of the foldable electronic device 2000.

According to an embodiment, the first region 2421, the second region 2422, and the fourth region 2424 may include a second CFRP 2221. The third region 2423 may include a fourth CFRP 2431. The fifth region 2425 may include a fifth CFRP 2432. Second tensile modulus of the second CFRP 2221 may be higher than fourth tensile modulus of the fourth CFRP 2431 and tensile modulus of the fifth CFRP 2432. Second toughness of the second CFRP 2221 may be lower than fourth toughness of the fourth CFRP 2431 and fifth toughness of the fifth CFRP 2432. As described above, the third region 2423 and the fifth region 2425 bent based on the state of the foldable electronic device 2000 may include a CFRP with high toughness for bending of the support plate 2200. For example, the fourth CFRP 2431 and the fifth CFRP 2432 may include a PAN based CFRP. As described above, in order to stably support the display panel 2410 and improve a surface quality of the flexible display 2040, the first region 2421, the second region 2422, and the fourth region 2424 may include a CFRP having high tensile modulus. For example, the second CFRP 2221 may include a pitch based CFRP.

The technical problems to be achieved in the present disclosure are not limited to those described above, and other technical problems not mentioned herein will be clearly understood by those having ordinary knowledge in the art to which the present disclosure belongs.

A foldable electronic device 101, 200, or 2000 is disclosed. The foldable electronic device 101, 200, or 2000 may comprise a foldable housing 201 including a first housing part 210 and a second housing part 220 rotatably connected to the first housing part 210. The foldable electronic device 101, 200, or 2000 may comprise a flexible display 230. The flexible display 230 may include a display panel 310, and a support plate 320 supporting the display panel 310 and formed from carbon fiber reinforced plastic (CFRP). The support plate 320 may include a plurality of rigid regions 321 and 322 and at least one flexible region 323. Each of the plurality of rigid regions 321 and 322 of the support plate 320 of the flexible display 230 may include a first layer 510 comprising a first CFRP 511, a second layer 520, stacked under the first layer 510, comprising a second CFRP 521, and a third layer 530, stacked under the second layer 520, comprising a third CFRP 531. Tensile modulus of the second CFRP 521 may be higher than tensile modulus of the first CFRP 511 and tensile modulus of the third CFRP 531.

According to an embodiment, the at least one flexible region 323 of the support plate 320 may include a first layer 510 comprising the first CFRP 511, a second layer 520, stacked under the first layer 510, comprising a fourth CFRP 541, and a third layer 530, stacked under the second layer 520, comprising the third CFRP 531. Tensile modulus of the fourth CFRP 541 may be substantially equal to tensile modulus of the first CFRP 511.

The first layer 510 of the plurality of rigid regions 321 and 322 and the first layer 510 of the at least one flexible region 323 may be formed integrally. For example, when the foldable electronic device is folded or unfolded, a portion of the first layer 510 that bends may be referred to as the first layer of the at least one flexible region 323. Even when the foldable electronic device is folded or unfolded, another portion of the first layer 510 that remains substantially flat may be referred to as the first layer of the plurality of rigid regions 321 and 322.

The second layer 520 of the plurality of rigid regions 321 and 322 and the second layer 520 of the at least one flexible region 323 may be formed integrally. For example, when the foldable electronic device is folded or unfolded, a portion of the second layer 520 that bends may be referred to as the second layer of the at least one flexible region 323. Even when the foldable electronic device is folded or unfolded, another portion of the second layer 520 that remains substantially flat may be referred to as the second layer of the plurality of rigid regions 321 and 322.

The third layer 530 of the plurality of rigid regions 321 and 322 and the third layer 530 of the at least one flexible region 323 may be formed integrally. For example, when the foldable electronic device is folded or unfolded, a portion of the third layer 530 that bends may be referred to as the third layer of the at least one flexible region 323. Even when the foldable electronic device is folded or unfolded, another portion of the third layer 530 that remains substantially flat may be referred to as the third layer of the plurality of rigid regions 321 and 322. According to an embodiment, the at least one flexible region 323 of the support plate 320 may include a first layer 510 comprising the first CFRP 511, a second layer 520, stacked under the first layer 510, comprising the second CFRP 521, and a third layer 530, stacked under the second layer 520, comprising the third CFRP 531. Tensile modulus of the second CFRP 521 may be higher than tensile modulus of the first CFRP 511 and tensile modulus of the third CFRP 531.

A foldable electronic device 101, 200, or 2000 is disclosed. The foldable electronic device 101, 200, or 2000 may comprise a foldable housing 201 including a first housing part 210 and a second housing part 220 rotatably connected to the first housing part 210. The foldable electronic device 101, 200, or 2000 may comprise a flexible display 230. The flexible display 230 may include a display panel 310, and a support plate 320 supporting the display panel 310 and formed from carbon fiber reinforced plastic (CFRP). The support plate 320 of the flexible display 230 may include a first layer 510 comprising a first CFRP 511, a second layer 520, stacked under the first layer 510, at least comprising a second CFRP 521, and a third layer 530, stacked under the second layer 520, comprising a third CFRP 531. Tensile modulus of the second CFRP 521 may be higher than tensile modulus of the first CFRP 511 and tensile modulus of the third CFRP 531.

According to an embodiment, the first CFRP 511 comprised in the first layer 510 may comprise first carbon fibers 512 arranged in a first direction. The second CFRP 521 comprised in the second layer 520 may comprise second carbon fibers 522 arranged in a second direction perpendicular to the first direction. The third CFRP 531 comprised in the third layer 530 may comprise third carbon fibers 532 arranged in the first direction.

According to an embodiment, the first housing part 210 and the second housing part 220 may be rotatably connected to each other with respect to a folding axis f. The first direction may be perpendicular to a direction of the folding axis f. The second direction may be parallel to the direction of the folding axis f.

According to an embodiment, the first housing part 210 and the second housing part 220 may be rotatably connected to each other with respect to a folding axis f. The first direction and the second direction may be inclined with respect to a direction of the folding axis f.

According to an embodiment, the first CFRP 511 and the third CFRP 531 may include a polyacrylonitrile (PAN) based CFRP. The second CFRP 521 may include a pitch based CFRP.

According to an embodiment, thermal conductivity of the second CFRP 521 may be higher than thermal conductivity of the first CFRP 511 and thermal conductivity of the third CFRP 531.

According to an embodiment, the display panel 310 of the flexible display 230 may include a first portion 311, a second portion 312, and a third portion 313 extending from the first portion 311 of the display panel 310 to the second portion 312 of the display panel 310, bent when the first housing part 210 and the second housing part 220 are folded with respect to each other. The second layer 520 of the support plate 320 may include a first region 1110 corresponding to the first portion 311 of the display panel 310, a second region 1120 corresponding to the second portion 312 of the display panel 310, and a third region 1130 corresponding to the third portion 313 of the display panel 310. The first region 1110 of the second layer 520 and the second region 1120 of the second layer 520 may include the second CFRP 521. The third region 1130 of the second layer 520 may include a fourth CFRP 541. The tensile modulus of the second CFRP 521 may be higher than tensile modulus of the fourth CFRP 541.

According to an embodiment, toughness of the fourth CFRP 541 may be higher than toughness of the second CFRP 521.

According to an embodiment, the third region 1130 of the second layer 520 may include a plurality of slits 320a overlapping the third portion 313 of the display panel 310.

According to an embodiment, the foldable electronic device 101, 200, or 2000 may further comprise a hinge assembly 250 rotatably connecting the first housing part 210 and the second housing part 220. The third region 1130 of the second layer 520 may overlap at least a portion of the hinge assembly 250, when the foldable electronic device 101, 200, or 2000 is viewed from above.

According to an embodiment, thickness of the second layer 520 may be greater than thickness of the first layer 510 and thickness of the third layer 530.

According to an embodiment, the foldable housing 2001 may further include a third housing part 2030 rotatably connected to the second housing part 2020. When the foldable electronic device 101, 200, or 2000 is in an unfolded state, the second housing part 2020 may be positioned between the first housing part 2010 and the third housing part 2030. The display panel 2410 of the flexible display 2040 may include a first portion 2411, a second portion 2412, a third portion 2413, extending from the first portion 2411 of the display panel 2410 to the second portion 2412 of the display panel 2410, bent when the first housing part 2010 and the second housing part 2020 are folded with respect to each other, a fourth portion 2414, and a fifth portion 2415, extending from the second portion 2412 of the display panel 2410 to the fourth portion 2414 of the display panel 2410, bent when the second housing part 2020 and the third housing part 2030 are folded with respect to each other.

According to an embodiment, the second layer 2220 of the support plate 2220 may include a first region 2421 corresponding to the first portion 2411 of the display panel 2410, a second region 2422 corresponding to the second portion 2412 of the display panel 2410, a third region 2423 corresponding to the third portion 2413 of the display panel 2410, a fourth region 2424 corresponding to the fourth portion 2414 of the display panel 2410, and a fifth region 2425 corresponding to the fifth portion 2415 of the display panel 2410. The first region 2421 of the second layer 2220, the second region 2422 of the second layer 2220, and the fourth region 2424 of the second layer 2220 may include the second CFRP 2221. The third region 2423 of the second layer 2220 may include a fourth CFRP 2431. The fifth region 2425 of the second layer 2220 may include a fifth CFRP 2432. The tensile modulus of the second CFRP 2221 may be higher than tensile modulus of the fourth CFRP 2431 and tensile modulus of the fifth CFRP 2432.

According to an embodiment, toughness of the second CFRP 2221 may be lower than toughness of the fourth CFRP 2431 and toughness of the fifth CFRP 2432.

According to an embodiment, the foldable electronic device 101, 200, or 2000 may include a waterproof tape 1310 disposed between the foldable housing 201 and the flexible display 230.

A flexible display 230 is disclosed. The flexible display 230 may include a display panel 310 including a bending portion 1210 and a flat portion 1220 that is planar. The flexible display 230 may include a support member 320 disposed under a surface of the display panel 310. The support member 320 may include a first support portion 1231 supporting the bending portion and a second support portion 1232 supporting the flat portion. The second support portion 1232 may include a first flat layer 1241, disposed under the flat portion 1220, having first tensile modulus, and a second flat layer 1242, disposed between the first flat layer 1241 and the flat portion 1220, having second tensile modulus smaller than the first tensile modulus.

According to an embodiment, the first flat layer 1241 may comprise one or more first fibers formed in a longitudinal direction of the bending portion 1210. The second flat layer 1242 may comprise one or more second fibers formed in a direction substantially perpendicular to the longitudinal direction.

According to an embodiment, the first flat layer 1241 may comprise a pitch based carbon fiber reinforced plastic (CFRP), and the second flat layer 1242 may comprise a polyacrylonitrile (PAN) based CFRP.

According to an embodiment, the first support portion 1231 may include a first bending layer 1251 substantially horizontal to the first flat layer 1241, having the first tensile modulus, and a second bending layer 1252 substantially horizontal to the second flat layer 1242, having the second tensile modulus.

According to an embodiment, the first support portion 1231 may include a first bending layer 1251 substantially horizontal to the first flat layer 1241, having third tensile modulus smaller than the first tensile modulus.

According to an embodiment, the third tensile modulus may be substantially equal to the second tensile modulus.

According to an embodiment, the first support portion 1231 may include a first bending layer 1251 and a second bending layer 1252 substantially horizontal to the first flat layer 1241 and the second flat layer 1242, respectively. The first bending layer 1251 may include at least one pattern formed therein, and the at least one pattern may not be formed in the second bending layer 1252.

According to an embodiment, the second support portion 1232 may include a third flat layer 1243 disposed under the first flat layer 1241, having tensile modulus smaller than the first tensile modulus.

According to an embodiment, the third flat layer 1243 may comprise one or more third fibers formed in a direction substantially perpendicular to a longitudinal direction of the bending portion 1210.

According to an embodiment, the first support portion 1231 may include a first bending layer 1251, a second bending layer 1252, and a third bending layer 1253 substantially horizontal to the first flat layer 1241, the second flat layer 1242, and the third flat layer 1243, respectively, and the first bending layer 1251 may have first tensile modulus, and the second bending layer 1252 and the third bending layer 1253 may have second tensile modulus and third tensile modulus smaller than the first tensile modulus, respectively.

According to an embodiment, the first bending layer 1251 and the second bending layer 1252 may include at least one pattern formed therein, and the at least one pattern may not be formed in the first bending layer 1251.

An electronic device 101, 200, or 2000 is disclosed. The electronic device 101, 200, or 2000 may include a foldable housing 201 including a first housing portion 210 (e.g., a first housing part) and a second housing portion 220 (e.g., a second housing part) connected to the first housing portion 210 to be foldable. The electronic device 101, 200, or 2000 may include a hinge assembly 250 connecting the first housing portion 210 and the second housing portion 220 so that the first housing portion 210 and the second housing portion 220 may be rotated to be folded and unfolded, respectively. The electronic device 101, 200, or 2000 may include a flexible display 230 accommodated in the first housing portion 210 and the second housing portion 220 and bendable when the first housing portion 210 and the second housing portion 220 are folded. The flexible display 230 may include a display panel 310 including a flat portion 1220 that is planar and a bending portion 1210 on the hinge assembly 250, and a support member 320 disposed between the display panel 310 and the foldable housing 201. The support member 320 may include a first flat layer 1241, disposed under the flat portion 1220, having first tensile modulus, and a second flat layer 1242, disposed between the first flat layer and the flat portion 1220, having second tensile modulus smaller than the first tensile modulus.

The effects that can be obtained from the present disclosure are not limited to those described above, and any other effects not mentioned herein will be clearly understood by those having ordinary knowledge in the art to which the present disclosure belongs, from the following description.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device comprising:
a foldable housing including:
a first housing part, and
a second housing part rotatably connected to the first housing part; and
a flexible display, the flexible display including:
a display panel, and
a support plate, configured to support the display panel, formed from a carbon fiber reinforced plastic, CFRP, and the support plate including a plurality of rigid regions and at least one flexible region,
wherein each of the plurality of rigid regions of the support plate of the flexible display includes:
a first layer portion comprising a first CFRP,
a second layer portion, stacked under the first layer portion, comprising a second CFRP, and
a third layer portion plurality, stacked under the second layer portion, comprising a third CFRP, and
wherein tensile modulus of the second CFRP is higher than tensile modulus of the first CFRP and tensile modulus of the third CFRP.

2. The foldable electronic device of claim 1,
wherein the first CFRP comprises first carbon fibers arranged in a first direction,
wherein the second CFRP comprises second carbon fibers arranged in a second direction perpendicular to the first direction, and
wherein the third CFRP comprises third carbon fibers arranged in the first direction.

3. The foldable electronic device of claim 2,
wherein the first housing part and the second housing part rotatably are connected to each other with respect to a folding axis,
wherein the first direction is perpendicular to a direction of the folding axis, and
wherein the second direction is parallel to the direction of the folding axis.

4. The foldable electronic device of claim 2,
wherein the first housing part and the second housing part rotatably are connected to each other with respect to a folding axis, and
wherein the first direction and the second direction are inclined with respect to a direction of the folding axis.

5. The foldable electronic device of claim 1,
wherein each of the first CFRP and the third CFRP corresponds to a polyacrylonitrile, PAN, based CFRP, and
wherein the second CFRP corresponds to a pitch based CFRP.

6. The foldable electronic device of claim 1,
wherein thermal conductivity of the second CFRP is higher than thermal conductivity of the first CFRP and thermal conductivity of the third CFRP.

7. The foldable electronic device of claim 1,
wherein the at least one flexible region of the support plate includes:
a first layer portion comprising the first CFRP,
a second layer portion, stacked under the first layer portion of the at least one flexible region, comprising a fourth CFRP, and
a third layer portion, stacked under the second layer portion of the at least one flexible region, comprising the third CFRP, and
wherein tensile modulus of the fourth CFRP is substantially equal to tensile modulus of the first CFRP.

8. The foldable electronic device of claim 7,
wherein toughness of the fourth CFRP is higher than toughness of the second CFRP.

9. The foldable electronic device of claim 1,
wherein the at least one flexible region of the support plate includes:
a first layer portion comprising the first CFRP,
a second layer portion, stacked under the first layer portion of the at least one flexible region, comprising the second CFRP, and
a third layer portion, stacked under the second layer portion of the at least one flexible region, comprising the third CFRP, and
wherein tensile modulus of the second CFRP is higher than tensile modulus of the first CFRP and tensile modulus of the third CFRP.

10. The foldable electronic device of claim 1,
wherein the display panel of the flexible display includes:
a first portion,
a second portion, and
a third portion extending from the first portion of the display panel to the second portion of the display panel and bent when the first housing part and the second housing part are folded with respect to each other,
wherein the plurality of rigid regions of the support plate overlap the first portion and the second portion of the display panel, when the flexible display is viewed from above, and
wherein the at least one flexible region of the support plate overlaps the third portion of the display panel, when the flexible display is viewed from above.

11. The foldable electronic device of claim 10,
wherein the at least one flexible region defines a plurality of slits.

12. The foldable electronic device of claim 10, further comprising a hinge assembly configured to rotatably connect the first housing part and the second housing part,
wherein the at least one flexible region overlaps at least a portion of the hinge assembly, when the flexible display is viewed from above.

13. The foldable electronic device of claim 1,
wherein thickness of the second layer portion is greater than thickness of the first layer portion and thickness of the third layer portion.

14. The foldable electronic device of claim 1,
wherein the foldable housing further includes a third housing part rotatably connected to the second housing part, wherein, when the foldable electronic device is in an unfolded state, the second housing part is positioned between the first housing part and the third housing part,
wherein the display panel of the flexible display includes:
a first portion,
a second portion,
a third portion, extending from the first portion of the display panel to the second portion of the display panel, bent when the first housing part and the second housing part are folded with respect to each other,
a fourth portion, and
a fifth portion, extending from the second portion of the display panel to the fourth portion of the display panel, bent when the second housing part and the third housing part are folded with respect to each other.

15. The foldable electronic device of claim 14,
wherein the plurality of rigid regions of the support plate overlap the first portion, the second portion, and the fourth portion, when the flexible display is viewed from above, and
wherein the at least one flexible region of the support plate overlaps the third portion and the fifth portion of the display panel, when the flexible display is viewed from above.
